# EUROPÄISCHE PATENTSCHRIFT

(11) **EP 2 221 693 B1**
(45) Veröffentlichungstag und Bekanntmachung des Hinweises auf die Patenterteilung: **12.03.2014**
(21) Anmeldenummer: 10153082.2
(22) Anmeldetag: 09.02.2010
(51) Int. Cl.: G05B 19/4093

(54) **Verfahren und Vorrichtung zum Erzeugen von Steuerdaten zum Steuern eines Werkzeugs an einer zumindest 5 Achsen umfassenden Werkzeugmaschine**
Method and device for generating control data for controlling a tool on a machine tool comprising at least 5 axes
Procédé et dispositif de production de données de commande destinées à commander un outil sur une machine-outil comportant au moins 5 axes

(30) Priorität: 09.02.2009 DE 102009008124
(43) Veröffentlichungstag der Anmeldung: 25.08.2010
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT)
(74) Vertreter: MERH-IP Matias Erny Reichl Hoffmann

(56) Entgegenhaltungen:
- EP-A2- 1 792 680
- WO-A1-2007/031337
- WO-A1-2008/133517
- DE-A1- 10 031 441
- DE-A1- 10 322 340
- DE-A1-102007 019 951
- US-A1- 2003 039 547
- US-B1- 6 311 098
- REN Y ET AL: "Clean-up tool path generation by contraction tool method for machining complex polyhedral models", COMPUTERS IN INDUSTRY, ELSEVIER SCIENCE PUBLISHERS. AMSTERDAM, NL LNKD- DOI:10.1016/J.COMPIND.2003.09.003, Bd. 54, Nr. 1, 1. Mai 2004 (2004-05-01), Seiten 17-33, XP004496448, ISSN: 0166-3615

## Beschreibung

Die vorliegende Erfindung betrifft ein Verfahren und eine Vorrichtung zum Erzeugen von Steuerdaten zum Steuern eines vorgegebenen Werkzeugs an einer mindestens 5 Achsen umfassenden Werkzeugmaschine zum Bearbeiten eines eingespannten Werkstücks durch Zerspanen.

Insbesondere betrifft die Erfindung ein Verfahren und eine Vorrichtung zum Erzeugen von Steuerdaten zum Steuern eines Fräswerkzeugs an einer zumindest 5 Achsen umfassenden CNC-gesteuerten Werkzeugmaschine, insbesondere CNC-gesteuerte Fräsmaschinen, Fräs-/Drehmaschinen oder Dreh-/Fräsmaschinen, oder einem zumindest 5 Achsen umfassenden CNC-gesteuerten Universal-Bearbeitungszentrum, wie z.B. einer Universal Fräs- und Bohr-Werkzeugmaschine, zum Bearbeiten eines in der Werkzeugmaschine eingespannten Werkstücks von einem Rohteil in ein Fertigteil mit einer angestrebten vorgegebenen Fertigteilgeometrie, insbesondere einer Komplettbearbeitung bis zu dem Fertigteil an der Werkzeugmaschine, wobei das vorbestimmte Fertigteil einen Grundkörper und zumindest einen von dem Grundkörper abstehenden Flankenabschnitt umfasst. Insbesondere betrifft dies die Herstellung bzw. das Formen von Fertigteilen wie z. B. Zahnrädern, insbesondere Stirnräder mit Innen- und/oder Außenverzahnung und Kegelrädern, Impellern oder Blisks. Im Allgemeinen betrifft dies das Fertigen beliebiger Werkstücke mit einem beliebigen Grundkörper und zumindest einen davon nach Außen oder Innen abstehenden Flankenabschnitt.

### HINTERGRUND DER ERFINDUNG

NC-gesteuerte und insbesondere CNC-gesteuerte Werkzeugmaschinen sind in den unterschiedlichsten Ausführungen aus dem Stand der Technik wohlbekannt. CNC (Computerized Numerical Control) bedeutet hierbei, dass die Werkzeugmaschine die Werkzeugführung num e-risch gesteuert wird, d. h. anhand eines CNC-Programms. Die Werkzeugmaschine ist mit einem Werkzeug ausgerüstet, das Material von dem Werkstück durch Zerspanen abträgt. Die Steuerung des Werkzeugs, insbesondere eine Bewegung und/oder eine Orientierung des Werkzeugs, erfolgt mittels einer Steuervorrichtung anhand von CNC-Steuerdaten des CNC-Programms. Des Weiteren steuern die CNC-Steuerdaten gegebenenfalls eine Orientierung des Werkstücks, z.B. durch Rotation eines Werkzeugtischs der Werkzeugmaschine, auf dem das Werkstück in der Werkzeugmaschine eingespannt ist Insgesamt ermöglicht eine Steuerung durch NC-Programme bzw. CNC-Steuerdaten eine effiziente, flexible, präzise und wiederholbare maschinelle Bearbeitung eines in der Werkzeugmaschine eingespannten Werkstücks anhand der CNC-Steuerdaten.

Im heutigen Stand der Technik werden CNC-Programme bzw. CNC-Steuerdaten mittels CAM-Systemen (CAM für Computer Aided Manufacturing) softwareunterstützt erstellt bzw. erzeugt. Ein erzeugtes CNC-Programm umfasst hierbei die Steuerdaten, die ein eingesetztes Werkzeug relativ zu einem in der Werkzeugmaschine eingespannten Werkstück entlang einer generierten Werkzeugbahn steuern, um Material des Werkstücks bei Abfahren der Bahn durch das Werkzeug abzutragen, z.B. durch Fräsen oder andere Verfahren.

Die numerische Bahnberechnung basiert hierbei auf geometrischen Größen und orientiert sich an der vorgegebenen angestrebten Fertigteilgeometrie des Werkstücks. Das Material des Werkstücks wird dann an der Werkzeugmaschine anhand der erzeugten Steuerdaten durch Abfahren der erzeugten bzw. berechneten Werkzeugbahnen durch ein eingesetztes Werkzeug Bahn für Bahn abgetragen bis die Fertigteilkontur erreicht wird. Des Weiteren können die Steuerdaten auch Daten umfassen, die einen Werkzeugwechsel instruieren, wobei dementsprechend gegebenenfalls während der Bearbeitung des Werkstücks automatische Werkzeugwechsel ausgeführt werden. Heutige Werkzeugmaschinen ermöglichen es meist zudem, einen automatischen, programmgesteuerten Werkstückwechsel vorzunehmen, bei dem ein erstes Werkstück nach Bearbeitung des ersten Werkstücks an einem Werkstück-Einspannmittel der Werkzeugmaschine mit einem zweiten Werkstück ausgewechselt wird, um mit eine Bearbeitung des zweiten Werkstücks auszuführen.

Besonders universell und flexibel einsetzbar sind CNC-gesteuerte Werkzeugmaschinen, die zumindest 5 Achsen umfassen, welche es ermöglichen, das Werkzeug in 5 Freiheitsgraden frei durch den Raum zum Abtragen von Material von dem Werkstück zu bewegen. Die 5 Bewegungsfreiheitsgrade umfassen hierbei die 3 Raumrichtungsfreiheitsgrade (meist konventionell drei orthogonal ansteuerbare Raumrichtungsfreiheitsgrade, insbesondere bezeichnet als X-Achse, Y-Achse und Z-Achse), die durch zumindest drei Linearachsen angesteuert werden können, und 2 Winkel- bzw. Rotationsfreiheitsgrade, die eine beliebige Werkzeugorientierung ermöglichen. Die zwei Winkel- bzw. Rotationsfreiheitsgrade können hierbei durch zwei oder mehrere Rundachsen der Werkzeugmaschine angesteuert werden. Heutige CNC-Werkzeugmaschinen mit zumindest 5 Achsen ermöglichen es, die 5 Freiheitsgrade simultan anzusteuern, wodurch besonders komplexe und effiziente Werkzeugwege relativ zu einem eingespannten Werkstück ermöglicht werden. Des Weiteren sind dem Stand der Technik zumindest 6 Achsen aufweisende CNC-Werkzeugmaschinen bekannt, an denen zumindest 3 Translationsachsen und zumindest 3 Rundachsen simultan angesteuert werden können.

Vorstehend beschriebene CNC-Werkzeugmaschinen werden im Formenbau universell eingesetzt, um Fertigteile mit komplexer Geometrie effizient und präzise durch zerspanendes Bearbeiten zu fertigen. Dies umfasst rotationssymmetrische Fertigteile wie z.B. Impeller oder Blisks mit hohen Anforderungen an die Einhaltung einer vorgegebenen geometrischen Form. Für den Maschinenbau, insbesondere z.B. im Schiffbau, bei der Umwelttechnik (z.B. bei Windkraftanlagen), in der Luftfahrt und beim Werkzeugmaschinenbau kann es zudem erforderlich sein, Getriebe unterschiedlichster Leistungen bereitzustellen, für die Zahnräder, insbesondere Stirnräder und Kegelräder, nach unterschiedlichen Anforderungen an Oberflächengüte, Tragbild und Abrollverhalten gefertigt werden müssen. Hierbei steht oftmals nicht zwingend das Erreichen einer hohen Stückzahl im Vordergrund, sondern vielmehr eine hohe Flexibilität in Bezug auf die Typenvielfalt, insbesondere in Bezug auf individuelle Geometrien umfassend komplizierter Flankengeometrien, Zahnflankengeometrien oder Blattgeometrien.

Dem Stand der Technik sind zur Fertigung von derartigen Fertigteilen mit einem Grundkörper und zumindest einem von dem Grundkörper abstehenden Flankenabschnitt, insbesondere Zahnräder, wie Stirnräder oder Kegelräder, Blisks oder Impellern, Spezialwerkzeugmaschinen bekannt, die mit Spezialwerkzeugen ausgerüstet sind, um Zahnprofile von Zahnrädern, wie Stirnrädern oder Kegelrädern, oder Blatt- bzw. Schaufelprofile von Impellern oder Blisks in unterschiedlichen Ausführungsformen zu fertigen.

Insbesondere sind dem Stand der Technik als Spezialmaschinen zum Fertigen einer Verzahnung von Zahnrädern Wälzfräsmaschinen bekannt, die dazu geeignet sind, in einem Abwälzfräsprozess mit Wälzfräswerkzeugen eine Verzahnung auf einem Werkstück zu formen. Derartige Wälzfräsmaschinen sind z.B. dazu geeignet Stirnräder mit einem zylinderförmigen Grundkörper und davon abstehenden Zahnflankenabschitten der Verzahnung oder Kegelzahnräder mit einem kegelförmigen Grundkörper und davon abstehenden Zahnflankenabschitten der Verzahnung zu fertigen.

Derartige Spezialmaschinen, insbesondere die vorstehend beschriebenen Wälzfräsmaschinen, sind in der Anschaffung und in der Unterhaltung kostenintensiv und die Fertigung von individuellen Flankenprofilen ist eingeschränkt durch die Form der Spezialwerkzeuge, z.B. die spezielle Schneidenform der Wälzfräswerkzeuge von Wälzfräsmaschinen, durch die bereits eine erreichbare bzw. fertigbare Zahn- bzw. Flankengeometrie vorgeben ist. Außerdem ist die Fertigung von individuellen Flankenprofilen an den vorstehend beschriebenen Spezialmaschinen eingeschränkt durch die beschränkten Freiheitsgrade in der möglichen Relativbewegung zwischen Werkstück und Werkzeug.

Des Weiteren sind zum Erreichen einer hohen Oberflächengüte gegebenenfalls Nachbearbeitungen der Werkstücke nach der Bearbeitung an den vorstehend beschriebenen Spezialmaschinen erforderlich, z.B. an zusätzlichen, kostenintensiven Spezialmaschinen.

Um die Probleme der vorstehend genannten Spezialmaschinen, insbesondere der Wälzfräsmaschinen, zum Fertigen von Zahnrädern, insbesondere Stirnrädern oder Kegelrädern, Blisks oder Impellern zu lösen, ist es vorteilhaft, derartige Zahnräder, insbesondere Stirnräder oder Kegelräder, Blisks oder Impeller an einer zumindest 5 Achsen umfassenden CNC-gesteuerten Werkzeugmaschine zu fertigen.

Dies ermöglicht den Einsatz von Standardwerkzeugen zum Herstellen dieser Fertigteile, wobei durch die hohe Flexibilität und den großen Einsatzbereich einer in mindestens 5 Freiheitsgraden ansteuerbaren Werkzeugmaschine komplexeste Geometrien, insbesondere komplexeste Flankenprofile bei Zahnrädern, wie Stirnrädern oder Kegelrädern, Blisks oder Impellern oder anderer Werkstücke ermöglicht.

Ein Verfahren zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils mit einem Grundkörper und zumindest einem von dem Grundkörper abstehenden Flankenabschnitt durch Zerspanen wird in dem Artikel Auf einfachem Weg zu guten Zähnen Zahnräder mit hoher Qualität auf Standardmaschinen fräsen von Hans-Peter Schossig beschrieben (erschienen in der Zeitschrift Werkstatt und Betrieb, im Carl Hanser Verlag, München, Ausgabe 2007, Nr. 4/28, auf den Seiten 28 □32, ISSN 0043-2792).

Dieser vorstehend genannte Artikel beschreibt ein Verfahren zur Herstellung von Zahnrädern mit einer Werkzeugmaschine umfassend 5 Achsen, insbesondere im Testbetrieb zum Herstellen einer Kegelradpaarung mit einer Oberflächengüte der Qualität 6 nach DIN 3965. In dem beschriebenen Verfahren werden zunächst alle notwendigen Parameter der Verzahnung nach DIN-Norm eingegeben. Dies entspricht grundlegenden Geometrieparametern der Fertigteilgeometrie des Fertigteils. Dazu können z. B. auch quantitative Angaben über ein gewünschtes Tragbild bei einer vorbestimmten bzw. geforderten Zahnform oder weitere Angaben bezüglich einer gewünschten Balligkeit in einzelnen Bereichen oder über die gesamten Zahnflanke eingegeben werden.

Diese grundlegenden Geometrieparameter werden in ein Rechnerterminal eingetippt und im Anschluss wird im Rechner durch mathematische bzw. numerische Berechnungen eine mathematische Beschreibung der gewünschten Zahngeometrie erzeugt. Mit Hilfe eines CAD/CAM-Systems wird auf Basis des Rechenergebnisses ein NC-Programm erzeugt, nach dem die 5-Achs-Werkzeugmaschine das gewünschte Fertigteil mit Standardwerkzeugen, insbesondere z. B. einem bekannten Schaftfräser, hergestellt werden kann. Ein ähnliches Verfahren wird z.B. auch in der WO 2008/133517 A1 gezeigt.

In den oben beschriebenen Verfahren wird das Fertigteil, insbesondere die Flankenflächen der Flanken durch einen Fräsprozess, z. B. mit einem Schaftfräser oder einem anderen rotationssymmetrischen Fräswerkzeug in einem Fräsprozess geformt. Dieser Fräsprozess wird zunächst mathematisch an einem Computer simuliert und die Fläche bzw. Flankenfläche der Verzahnung wird mit Hilfe eines CAD-Systems am Rechner approximiert (angenähert). Bei einer derartigen Approximation mit einem CAD-System entstehen jedoch Abweichungen zwischen der konstruierten und der idealen Flankenfläche bzw. Zahnflankengeometrie in Abhängigkeit der Leistungsfähigkeit des Approximationsmoduls oder z. B. auch einer Sorgfalt des Anwenders des CAD-Systems.

Jedoch stellen hochwertige bekannte CAD/CAM-Systeme (z. B. CATIA, UGS, EUKLID, Tebis, HyperMill) oder Spezial-CAM-Systeme (z. B. MAX-5, MAX-AB MAX-SI von Concepts NREC) Funktionen zum Generieren von Steuerprogrammen für Fräswerkzeuge mit zylindrischer und konvexer Form zur Verfügung.

Hierbei werden gerade für die Herstellung von Zahnflanken von Zahnrädern, insbesondere Stirnrädern oder Kegelrädern, die Flankenflächen derart approximiert, dass sie für die vorstehend genannten Spezialwerkzeugmaschinen zum Herstellen von Zahn- oder Kegelrädern eingerichtet sind. Hierbei wird die Fläche einer Zahnflanke des herzustellenden Zahnrads oder eines Blatts eines Impellers durch sogenannte Isoparameterkurven beschrieben (z.B. U-V-Kurven), die mathematisch einen internen Aufbau der Fläche bzw. eine geometrische Form der Fläche beschreiben. Hierbei hängt die Lage der Isoparameterkurven zueinander und in Relation zu der Lage der angestrebten Verzahnungsform stark von einer Anordnung von vorgegebenen Eingaben zum Beschreiben der Fertigteilgeometrie ab, insbesondere Eingaben in dem CAD-System. Nach dem Stand der Technik ist ein Verlauf der Isoparameterkurven entlang der vorgegebenen Seitenflankenfläche einer angestrebten Verzahnungsform nicht in gleichmäßigen Reihen senkrecht zum Zahngrund der Verzahnung des Zahnrades angeordnet. Somit sind die generierten Isoparameterkurven nicht an dem Fuß der Zahnflanken oder einem Verlauf des Zahngrunds orientiert.

Bei dem Erzeugen bzw. Generieren der Werkzeugbahnen für die Bearbeitung der Zahnflanken oder Blattflanken mit einem der dem Stand der Technik bekannten CAD/CAM-Systeme auf Basis der oben beschriebenen, mittels Approximation erzeugten, mathematischen Beschreibung der Seiten- bzw. Flankenflächen richtet sich das Werkzeug bzw. eine Orientierung des Werkzeugs an den Isoparameterkurven der abzuwälzenden Flächen aus.

Hierbei ergibt sich das Problem, dass bei Abfahren der Werkzeugbahn durch das Werkzeug eine unregelmäßige Werkzeugorientierung bzw. Anstellung des Werkzeugs zu der zu zerspanenden Fläche ergeben kann, die zu unvorteilhaften Schwenkbewegungen und unstetigen Rundachsbewegungen der Werkzeugmaschine führen kann und zu einer daraus folgenden unstetigen Bewegung des Werkzeugs entlang der Bahn. Des Weiteren kann dies zu einer unvorteilhaften Schrägstellung des Werkzeugs relativ zu dem Flankenverlauf beziehungsweise gegebenenfalls relativ zu einer Abwälz-Werkzeugführung führen, oder zu einer Variation der Schrägstellung des Werkzeugs relativ zu einer Bewegungsrichtung entlang einer Werkzeugbahn entlang der zu formenden Fläche der Flanke. Des Weiteren kann eine unregelmäßige Anstellung des Werkzeugs zu einer zerspanungstechnisch ungünstigen Situation führen, die eine mangelhaften Oberflächengüte, geometrische Fehler und auch einem möglicherweise erhöhten Verschleiß des Werkzeugs bedingen kann.

DE 100 31441 A1 beschreibt ein Verfahren zum Steuern einer Arbeitsbewegung eines Fräswerkzeugs für die Bearbeitung einer Turbinenschaufel, wobei der Materialblock aus dem die Turbinenschaufel herausgearbeitet werden soll um eine Längsachse der Turbinenschaufel gedreht wird und das Fräswerkzeug in Ebenen um die Turbinenschaufel geführt wird, die senkrecht zu der Längsachse der Turbinenschaufel orientiert sind.

### ZUSAMMENFASSUNG DER ERFINDUNG

Aufgabe der vorliegenden Erfindung ist es, ein Verfahren und eine Vorrichtung zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils mit einem Grundkörper und zumindest einem von dem Grundkörper abstehenden Flankenabschnitt durch Zerspanen vorzuschlagen, die den aus dem Stand der Technik bekannten Verfahren und Vorrichtungen gegenüber optimiert sind und stetige Rundachsbewegungen des Werkzeugs und einen erhöhten Verschleiß des Werkzeugs vermeiden und eine optimale Oberflächengüte auf der Fläche des Flankenabschnitts ermöglichen.

Erfindungsgemäß wird diese Aufgabe gelöst durch ein Verfahren mit den Merkmalen des Anspruchs 1 und eine Vorrichtung mit den Merkmalen des Anspruchs 11. Des Weiteren stellt die vorliegende Erfindung ein Computerprogrammprodukt nach Anspruch 12 bereit, das in Verbindung mit einer Datenverarbeitungseinrichtung dazu geeignet ist, ein erfindungsgemäßes Verfahren auszuführen.

Vorteilhafte Ausgestaltungen und bevorzugte Ausführungsbeispiele der Erfindung werden durch die abhängigen Ansprüche beschrieben.

Die Erfindung betrifft ein Verfahren zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils mit einem Grundkörper und zumindest einem von dem Grundkörper abstehenden Flankenabschnitt durch Zerspanen, wobei das Verfahren die Schritte umfasst:
Bestimmen grundlegender Geometrieparameter einer Fertigteilgeometrie des Fertigteils, wobei die Fertigteilgeometrie einer Geometrie des vorbestimmten Fertigteils entspricht,
Erzeugen von Fertigteilgeometriedaten der vorbestimmten Fertigteilgeometrie des Fertigteils anhand der grundlegenden Geometrieparameter, wobei die Fertigteilgeometriedaten zumindest eine Geometrie einer zumindest einen Fläche des zumindest einen Flankenabschnitts angeben, und
Erzeugen von Bahndaten anhand der Fertigteilgeometriedaten, wobei die Bahndaten angeben, welche zumindest eine Werkzeugbahn entlang der zumindest einen Fläche des Flankenabschnitts durch das Werkzeug mit welcher Werkzeugorientierung relativ zu dem Werkstück zum Abtragen von Material des Werkstücks abzufahren ist, wobei die Werkzeugorientierung des Werkzeugs einer Orientierung einer Rotationsachse des Werkzeugs entspricht und das Werkzeug zum Abtragen von Material des Werkstücks um die Rotationsachse des Werkzeugs rotiert.

Das erfindungsgemäße Verfahren ist gekennzeichnet dadurch, dass die Fertigteilgeometriedaten zum Angeben der Geometrie der zumindest einen Fläche des Flankenabschnitts Positionsdaten einer Gruppe von Punkten auf der zumindest einen Fläche des Flankenabschnitts umfassen, wobei die Positionsdaten eine Position der Punkte der Gruppe von Punkten angeben,
wobei jeder Punkt der Gruppe von Punkten einer Spalte von Punkten und einer Zeile von Punkten zugeordnet ist, wobei alle Punkte einer Spalte von Punkten in einer gemeinsamen Ebene liegen und die gemeinsame Ebene der Punkte einer Spalte von Punkten im Wesentlichen senkrecht auf einer tangentialen Ebene der Mantelfläche des Grundkörpers steht, vorzugsweise auf der Tangentialebene in einem gemeinsamen Punkt der Mantelfläche und der gemeinsamen Ebene,
wobei die Bahndaten derart erzeugt werden, dass die zumindest eine Werkzeugbahn im Wesentlichen parallel zu einer durch die Punkte einer ersten Zeile von Punkten verlaufende Kurve verläuft, und
wobei die Bahndaten weiterhin derart erzeugt werden, dass die Rotationsachse des Werkzeugs sich an jedem der Punkte der ersten Zeile von Punkten im Wesentlichen an der gemeinsamen Ebene der Spalte des jeweiligen Punkts der ersten Zeile orientiert, oder gegebenenfalls vorzugsweise in der gemeinsamen Ebene liegt.

Vorzugsweise wird die Rotationsachse des Werkzeugs an jedem der Punkte der ersten Zeile von Punkten im Wesentlichen in der gemeinsamen Ebene der Spalte des jeweiligen Punkts der ersten Zeile liegend orientiert.

Vorzugsweise liegt der gemeinsame Punkt auf einer Leitkurve, wobei die Leitkurve auf der Mantelfläche des Grundkörpers verläuft. Bei eine Verzahnung aufweisenden Werkstücken verläuft die Leitkurve insbesondere vorzugsweise in dem Zahngrund zwischen zwei Zähnen.

Vorzugsweise steht die gemeinsame Ebene weiterhin im Wesentlichen senkrecht auf der Leitkurve.

Vorzugsweise ist das Verfahren anzuwenden zum Herstellen eines Fertigteils mit einem rotationssymmetrischen Grundkörper, z.B. Zahnräder, wie Stirnräder oder Kegelräder, Blisks oder Impeller oder eines anderen Werkstücks mit beliebigem Grundkörper und zumindest einem davon nach Innen oder Außen abstehenden Flankenabschnitt.

Erfindungsgemäß wird wie vorstehend beschrieben eine zu bearbeitende oder zu formende Fläche des Flankenabschnitts bzw. deren vorbestimmte Geometrie durch erzeugte Fertigteilgeometriedaten beschrieben, die die Oberfläche bzw. die besagte Fläche des Flankenabschnitts durch Positionsdaten von auf der Fläche liegenden Punkten beschreiben. Die Fertigteilgeometriedaten umfassen erfindungsgemäß Positionsdaten aller Punkte der Gruppe von Punkten zum Beschreiben der Geometrie der zumindest einen Fläche des Flankenabschnitts, wobei die Positionsdaten zumindest eine Position im dreidimensionalen Raum mit 3 Koordinatenwerten für die 3 Translationsfreiheitsgrade der zumindest fünfachsigen Werkzeugmaschine umfassen oder zumindest in diese transformierbar sind.

Erfindungsgemäß wird die Gruppe von Punkten unterteilt in Spalten von Punkten und Zeilen von Punkten, wobei jeder Punkt der Gruppe von Punkten auf der zumindest einen Fläche des Flankenabschnitts einer Spalte von Punkten und/oder einer Zeile von Punkten zugeordnet ist.

Weiterhin werden die Bahndaten erfindungsgemäß derart erzeugt, dass die beschriebene Werkzeugbahn im Wesentlichen parallel zu einer durch die Punkte einer der Zeilen von Punkten der Gruppe von Punkten verlaufenden Kurve verläuft. Dies ermöglicht es, auf einfache Art und Weise einen Verlauf einer Werkzeugbahn zu berechnen, indem die Werkzeugbahn anhand einer Kurve berechnet wird, die durch alle Punkte einer Zeile verläuft, wobei die Punkte exakt durch die Positionsdaten angegeben werden.

Weiterhin wird die Geometrie der zumindest einen Fläche des Flankenabschnitts durch eine Gruppe von Punkten beschrieben, bei der eine Spalte von Punkten jeweils Punkte umfasst, die alle in einer gemeinsamen Ebene liegen, die im Wesentlichen senkrecht zu dem Grundkörper liegt. Dies bedeutet, dass die gemeinsame Ebene der Punkte einer Spalte von Punkten im Wesentlichen senkrecht zu einer Mantelfläche des Grundkörpers steht. Ist der Grundkörper durch eine gekrümmte Fläche bzw. gekrümmte Außen- oder Seitenfläche gegeben, liegt die gemeinsame Ebene der Punkte einer Spalte von Punkten im Wesentlichen somit senkrecht zu einer gedachten Tangentialebene zu der gekrümmten Mantelfläche des Grundkörpers. Der Grundkörper beschreibt hierbei eine Geometrie eines gegebenenfalls rotationssymmetrischen Körpers, z. B. eines Kegels oder Zylinders oder anderer rotationssymmetrischer geometrischer Formen. Es sei hierbei angemerkt, dass der Grundkörper eine geometrische Form aufweist, die der Geometrie des Fertigteils bei fehlenden (weggedachten) Flankenabschnitten entspricht. Bei einem Stirnrad entspräche der Grundkörper somit einer Zylinderform oder einer Hohlzylinderform (gegebenenfalls bei einem Stirnrad mit Innenverzahnung). Bei einem Kegelrad entspräche der Grundkörper einer Kegelform oder einer rotationssymmetrischen Kegelteilform.

Erfindungsgemäß werden die Bahndaten weiterhin derart erzeugt, dass die Rotationsachse des Werkzeugs an der oben genannten gemeinsamen Ebene der Punkte einer Spalte von Punkten orientiert wird. Insbesondere wird die Rotationsachse des Werkzeugs an jedem der Punkte einer Zeile von Punkten im Wesentlichen in der gemeinsamen Ebene der Spalte dieses jeweiligen Punktes der Zeile orientiert.

Dies ergibt den Vorteil, dass die Bahnberechnung einer Werkzeugbahn zum Abtragen von Material von dem Werkstück zum Formen zumindest einer Fläche des zumindest einen vom Grundkörper abstehenden Flankenabschnitts auf einfache und mathematisch exakte Weise an einer Gruppe von Punkten auf der zumindest einen Fläche des Flankenabschnitts orientiert werden kann. Die Werkzeugorientierung beim Abfahren einer erzeugten Bahn orientiert somit sich nicht an möglicherweise schräg stehenden oder sich schräg stellenden Isoparameterkurven, sondern anhand einer Ebene, die stets senkrecht zum Grundkörper steht bzw. senkrecht zur Außenfläche des Grundkörpers oder zumindest senkrecht zu einer Tangetialebene des Grundkörpers steht.

Hierdurch werden unnötige Schrägstellungen oder Variationen von Schrägstellungen des Werkzeugs effektiv verhindert, so dass unstete Rundachsenbewegungen an der Werkzeugmaschine vermieden werden können.

Des Weiteren ermöglicht dies, durch Vermeiden von Schrägstellungen des Werkzeugs einen Bearbeitungsbereich bzw. Einsatzbereich an dem Werkzeug zu verringern und somit den Verschleiß des Werkzeugs zu verringern. Als weitere Vorteile ergeben sich eine verbesserte und exaktere Formung des Tragbildes der Oberfläche bzw. der zumindest einen Fläche des zumindest einen Flankenabschnitts. Eine exaktere Formung des Tragbildes ermöglicht z.B. weiterhin eine Herstellung eines Zahnrads bzw. Zahnradpaars mit Optimiertem Abrollverhalten, so dass z.B. zusätzlich vorteilhaft eine Geräuschentwicklung beim Abrollen vermindert werden kann.

Als grundlegende Geometrieparameter eignen sich z. B. ein oder mehrere Parameter aus der nicht beschränkend aufzufassenden Gruppe von Parametern: Form des Grundkörpers, Radius bzw. Umfang des Grundkörpers, Höhe des Grundkörpers, Form des abstehenden Flankenabschnitts, Anzahl der abstehenden Flankenabschnitte, Höhe des oder der abstehenden Flankenabschnitte oder Längsausdehnung des oder der abstehenden Flankenabschnitte, gegebenenfalls bezüglich einer radialen Ausdehnung des Grundkörpers.

Vorzugsweise ist das vorbestimmte Fertigteil, das in dem Verfahren hergestellt bzw. bearbeitet wird, ein Zahnrad, insbesondere Kegelrad oder Stirnrad, Ritzel, Blisk oder ein Impeller oder ein anderes Werkstück mit einem beliebigen Grundkörper und zumindest einem davon nach Innen oder Außen abstehenden Flankenabschnitt, wobei der zumindest eine Flankenabschnitt entweder eine Zahnflanke des Zahnrads, eine Zahnflanke des Ritzels oder eine Blattflanke des Impellers oder Blisks ist.

Dies hat den Vorteil, dass das Verfahren insbesondere für das Fertigen von Zahnrädern, Kegelrädern, Stirnrädern, Ritzeln, Blisks oder Impellern angewendet werden kann, wobei das Verfahren weiterhin dazu geeignet ist, vorteilhaft alle gängigen, komplexen und gegebenenfalls in konventionellen Verfahren nicht herstellbare Geometrien zu fertigen. Dies umfasst insbesondere bei Zahnrädern, Stirnrädern, Kegelrädern und Ritzeln alle bekannten Verzahnungsformen und Verzahnungsausdehnungen z.B. die Möglichkeiten einer Evolventenverzahnung, Zykloidenverzahnung oder Konchoidenverzahnung, oder andere Verzahnungstypen mit Zahnflankenflächen, die z.B. einer Freiformfläche mit einseitiger oder allseitiger konvex oder konkaver Krümmung entsprechen. In Längsrichtung der Verzahnung ermöglicht das Verfahren alle gängigen Typen einer Verzahnung, insbesondere gerade-verzahnt, bogenverzahnt, pfeilverzahnt, schrägverzahnt, spiralverzahnt oder evolventenverzahnt oder andere mögliche Verzahnungstypen.

Vorzugsweise ist die Werkzeugmaschine eine Fräsmaschine, Fräs-/Drehmaschine oder Dreh-/Fräsmaschine, wobei das rotationssymmetrische Werkzeug ein Schaftfräser, Kugelfräser, Torusfräser, Tonnenfräser oder ein anderes rotationssymmetrisches Werkzeug ist.

Dies hat den Vorteil, dass das Verfahren an einer Fräsmaschine mit gängigen rotationssymmetrischen Standardwerkzeugen wie Schaftfräsern, Kugelfräsern, Torusfräsern, Tonnenfräsern oder anderen gängigen rotationssymmetrischen Werkzeugen angewendet werden kann.

Vorzugsweise ist die zumindest eine Fläche des zumindest einen Flankenabschnitts eine zumindest einseitig konvex und/oder konkav gekrümmte Fläche, oder eine beliebig gekrümmte Freiformfläche.

Dies ermöglicht es, in dem erfindungsgemäßen Verfahren zumindest einseitig konvex und/oder konkav gekrümmte Flächen, insbesondere aber auch Freiformflächen mit allseitiger, unabhängiger konvexer und/oder konkaver Krümmung oder sogar beliebigen Krümmungsformen zu formen.

Vorzugsweise umfassen die Fertigteilgeometriedaten zum Angeben der Geometrie der zumindest einen Fläche des zumindest einen Flankenabschnitts weiterhin zu zumindest einem ersten Punkt der Gruppe von Punkten Normalendaten, wobei die Normalendaten zumindest eine Richtung oder zumindest Orientierung eines Normalenvektors der zumindest einen Fläche des zumindest einen Flankenabschnitts an dem ersten Punkt angeben, wobei die Bahndaten weiterhin vorzugsweise derart erzeugt werden, dass die Rotationsachse des Werkzeugs an dem ersten Punkt im Wesentlichen senkrecht zu dem Normalenvektor an dem ersten Punkt ist.

Dies hat den Vorteil, dass die Bahnberechnung anhand der Fertigteilgeometriedaten besonders einfach und exakt anhand der Positionsdaten von Punkten einer Gruppe von Punkten auf der zumindest einen Fläche des Flankenabschnitts und Normalendaten berechnet werden kann. Eine Orientierung bzw. eine vorteilhafte Orientierung des Werkzeugs kann exakt an einem Punkt der Gruppe von Punkten an einer Richtung des Normalenvektors an diesem Punkt orientiert werden, so dass sich eine exakte senkrechte Anstellung des Werkzeugs an die vorbestimmte Fläche bzw. Flächengeometrie bewerkstelligen lässt. Dies ermöglicht eine exakte Bahnberechnung auf besonders einfache Art und Weise, wobei die zumindest 3 Translationsfreiheitsgrade an der Werkzeugmaschine an den Positionsdaten der Punkte der Gruppe von Punkten orientiert sind, und die 2 Freiheitsgrade der Werkzeugorientierung bzw. der Anstellung der Rotationsachse des Werkzeugs durch Normalendaten an den Punkten beschrieben werden und an den Normalendaten eines Normalenvektors an einem der Punkte und der gemeinsamen Ebene der Punkte einer Spalte von Punkten orientiert werden kann.

Vorzugsweise ist der Normalenvektor der zumindest einen Fläche des zumindest einen Flankenabschnitts an dem ersten Punkt derart ausgerichtet, dass er in der gemeinsamen Ebene der Punkte der Spalte, der der erste Punkt zugeordnet ist, liegt.

Dies bedeutet, dass die Gruppe von Punkten vorteilhaft derart die zumindest eine Fläche des Flankenabschnitts beschreibt, dass eine Spalte von Punkten gerade so angeordnet wird, dass zumindest ein Normalenvektor an einem der Punkte der Spalte in der gemeinsamen Ebene der Spalte von Punkten liegt, die wiederum senkrecht zu dem rotationssymmetrischen Grundkörper liegt. Somit wird vorteilhaft eine Orientierung des Werkzeugs auf einfache Art und Weise und mathematisch exakt in einer senkrecht zu dem rotationssymmetrischen Grundkörper stehenden Ebene orientiert.

Vorzugsweise umfassen die Fertigteilgeometriedaten zum Angeben der Geometrie der zumindest einen Fläche des zumindest einen Flankenabschnitts weiterhin Normalendaten zu jedem der Punkte einer ersten Spalte aus der Gruppe der Punkte, wobei der erste Punkt vorzugsweise der ersten Spalte zugeordnet ist, so dass die Normalendaten weiterhin eine Richtung bzw. Orientierung des jeweiligen Normalenvektors der zumindest einen Fläche des zumindest einen Flankenabschnitts an jedem Punkt der ersten Spalte angeben, wobei die Normalenvektoren vorzugsweise an den Punkten der ersten Spalte jeweils in der gemeinsamen Ebene der Punkte der ersten Spalte liegen.

Dies ermöglicht, dass die Fertigteilgeometriedaten die Geometrie der zumindest einen Fläche möglichst mathematisch exakt angeben durch die Angabe von Positionsdaten einer Gruppe von Punkten und den dazugehörigen Normalendaten zu den Normalenvektoren der Fläche an jedem der Punkte, wodurch an jedem Punkt Position und Orientierung der Fläche mathematisch exakt angegeben werden können und eine Berechnung der Bahn möglichst exakt an den Positionsdaten und den Normalendaten der Punkte durchgeführt werden kann.

Vorzugsweise geben die Bahndaten eine Mehrzahl von Werkzeugbahnen entlang der zumindest einen Fläche des zumindest einen Flankenabschnitts an, wobei vorzugsweise jeder der Spalten der Gruppe von Punkten die gleiche Zahl an Punkten zugeordnet ist und vorzugsweise jede der Mehrzahl von Werkzeugbahnen jeweils im Wesentlichen parallel zu einer der Zeilen von Punkten verläuft.

Dies hat den Vorteil, dass jede Spalte der Gruppe von Punkten die gleiche Zahl an Punkten hat und somit jeder Punkt einer und genau einer Zeile zugeordnet werden kann, wobei die Zeilen keine Überschneidungen aufweisen und vorteilhaft auf einfache Art und Weise mathematisch exakt Werkzeugbahnen jeweils entlang einer der Zeilen von Punkten erzeugt werden können. Durch Abfahren der Mehrzahl von Werkzeugbahnen ermöglicht es das Verfahren, eine Fläche in beliebiger Form mit einseitig oder allseitig gekrümmter, konvexer oder konkaver Krümmung durch ein Standardwerkzeug entlang einer Mehrzahl von Werkzeugbahnen zu formen. Weiterhin können die Mehrzahl von Werkzeugbahnen auf einfache Art und Weise mathematisch exakt erzeugt bzw. berechnet werden, da jede der Werkzeugbahnen jeweils im Wesentlichen parallel zu einer der Zeilen von Punkten verläuft, wobei der Zeilen von Punkten keine Überschneidungen aufweisen.

Vorzugsweise umfasst das Verfahren weiterhin einen Verfahrensschritt Festlegen eines oder mehrerer Punktdichtegrenzwerte für die Gruppe von Punkten auf der zumindest einen Fläche des zumindest einen Flankenabschnitts, wobei im Schritt Bestimmen von Fertigteilgeometriedaten vorzugsweise die Fertigteilgeometriedaten derart erzeugt werden, dass der minimale und/oder durchschnittliche Abstand zwischen benachbarten Punkten einer Zeile der Gruppe von Punkten und/oder benachbarten Punkten einer Spalte der Gruppe von Punkten jeweils zumindest einen der festgelegten einen oder mehreren Punktdichtegrenzwerte nicht unterschreitet und/oder der maximale und/oder durchschnittliche Abstand zwischen benachbarten Punkten einer Zeile der Gruppe von Punkten und/oder benachbarten Punkten einer Spalte der Gruppe von Punkten jeweils zumindest einen der festgelegten einen oder mehreren Punktdichtegrenzwerte nicht überschreitet.

Dies hat den Vorteil, dass Parameter eingegeben werden können, anhand derer eine Dichte der Gruppe von Punkten bestimmbar ist, indem Punktdichtegrenzwerte angegeben werden können, die Grenzwerte für Abstände zwischen zwei benachbarten Punkten in einer Spalte und/oder einer Zeile von Punkten angeben. Dies umfasst z. B. einen oder mehrere der Parameter aus der folgenden Gruppe: ein erster Punktdichtegrenzwert als Maximalwert eines Abstands zwischen zwei benachbarten Punkten einer Zeile, ein zweiter Punktdichtegrenzwert als Minimalwert für den Abstand zwischen zwei benachbarten Punkten einer Zeile, ein dritter Punktdichtegrenzwert für den maximalen Durchschnittswert des Abstands zwischen zwei benachbarten Punkten einer Zeile, ein vierter Punktdichtegrenzwert als Minimalwert für den Durchschnitt des Abstands zwischen zwei benachbarten Punkten einer Zeile, und dementsprechend fünfte bis achte Punktdichtegrenzwerte als Maximalwert, Minimalwert, maximaler Durchschnittswert und minimaler Durchschnittswert des Abstands zwischen zwei benachbarten Punkten einer Spalte. Dies ermöglicht das Einstellen einer möglichst individuellen und vorteilhaften Punktdichte beim Erzeugen der Fertigteilgeometriedaten entsprechend einer gewünschten Oberflächengüte und/oder eine Genauigkeit beim Berechnen der Bahndaten der einen oder mehreren Werkzeugbahnen.

Vorzugsweise ist das Werkzeug ein einen Eckenradius umfassendes Werkzeug, vorzugsweise ein einen Eckenradius umfassender Schaftfräser, wobei die Bahndaten vorzugsweise derart erzeugt werden, dass ein abgerundeter Übergangsbereich zwischen dem zumindest einen Flankenabschnitt und dem Grundkörper des Werkstücks bei Abfahren der zumindest einen Werkzeugbahn anhand der Bahndaten entsprechend dem Eckenradius gebildet wird, wobei die Bahndaten insbesondere vorzugsweise derart erzeugt werden, dass zusätzlich zu dem abgerundeten Übergangsbereich bei Abfahren der Werkzeugbahn anhand der Bahndaten ein Tangentialabschnitt zwischen dem abgerundeten Übergangsbereich und einem verzahnungsaktiven Flankenbereich der Fläche des Zahnflankenabschnitts ausgebildet wird.

Dies hat den Vorteil, dass bei Bearbeiten einer Bahn am Fuß des Flankenabschnitts im Übergangsbereich zwischen dem Flankenabschnitt und dem Grundkörper gleichzeitig eine Fläche des Flankenabschnitts und ein dem Eckenradius des Schaftfräsers entsprechender runder Übergangsbereich zwischen dem Flankenabschnitt und dem Grundkörper gebildet werden kann. Somit wird vorteilhaft ein Verfahren vorgeschlagen, in dem mit einem Standardwerkzeug, z.B. einem einen Eckenradius umfassenden Schaftfräser, ohne Werkzeugwechsel sowohl eine Fläche des zumindest einen Flankenabschnitts geformt werden kann, als auch simultan bei Abfahren der Bahn zusätzlich der Übergangsbereich zwischen dem Grundkörper und dem Flankenabschnitt in abgerundeter Weise geformt werden kann.

Dies ermöglicht es zudem bei der Herstellung eines Fertigteils mit mehreren Flankenabschnitten einen minimalen Abstand zwischen zwei Flankenabschnitten einen Abstand zwischen den Flankenabschnitten entsprechend einem Durchmesser eines standardmäßigen Werkzeugs zu formen. Herstellbare und bearbeitbare Fertigteile sind in diesem Fall bezüglich der machbaren Größenverhältnisse nur durch die Dimensionierung von Standardwerkzeugen begrenzt und weisen ansonsten eine besonders vorteilhafte Flexibilität in den formbaren Geometrieformen auf.

Der Begriff verzahnungsaktiver Zahnflankenabschnittmeint hierbei im Wesentlichen denjenigen Abschnitt der Fläche eines Flankenabschnitts, der die Krümmung entsprechend der Verzahnungsform aufweist. Dies entspricht im Wesentlichen der Oberfläche, die bei aneinander abrollender Verzahnung und Gegenverzahnung bzw. Flanke und Gegenflanke mit einer entsprechenden Gegenflanke in Kontakt kommt, ggf. einschließlich einer Verlängerung der gekrümmten Verzahnungsform zum Ausbilden eines Sicherheitsbereichs. Der weiterhin herausgearbeitete Tangentialabschnitt geht vorzugsweise auf der unteren Seite direkt und im Wesentlichen tangential in den abgerundeten Übergangsbereich und auf der oberen Seite vorzugsweise direkt und im Wesentlichen tangential in den verzahnungsaktiven Zahnflankenabschnitt über. Hierbei wird ein Schaftfräser vorzugsweise am tiefsten Punkt des verzahnungsaktiven Zahnflankenabschnitts im Wesentlichen tangential an den verzahnungsaktiven Zahnflankenabschnitt angestellt, um den Tangentialabschnitt sowie den abgerundeten Bereich gleichzeitig bei dem Abfahren der berechneten, tiefsten Zeile bzw. Bahn orientiert an der Leitkurve zu formen bzw. herauszuarbeiten. Die Höhe des Tangentialabschnitts, d.h. der Abstand zwischen dem abgerundeten Übergangsbereich und dem verzahnungsaktiven Zahnflankenabschnitt, kann hierbei als Vorgabe für die Bahnberechnung frei gewählt bzw. eingestellt werden.

Der Tangentialabschnitt kann zusammen mit dem abgerundeten Bereich durch das Abfahren nur einer Werkzeugbahn mit dem Schaftfräser vorteilhaft schnell und effizient herausgearbeitet werden. Weiterhin wirkt sich ein derartiges Profil des Zahngrunds, bei dem alle Formen und Abschnitte tangential ineinander übergehen überraschend vorteilhaft auf die Festigkeit der gefertigten Verzahnung aus.

Vorzugsweise weist das Werkzeug weiterhin eine Längserstreckung entlang der Rotationsachse des Werkzeugs auf, wobei die Bahndaten weiterhin vorzugsweise derart erzeugt werden, dass das Werkzeug bei einem Abfahren einer ersten Werkzeugbahn einer Mehrzahl von Werkzeugbahnen orientiert an einer ersten Zeile von Punkten im Vergleich zu einem Abfahren einer zweiten Werkzeugbahn der Mehrzahl von Werkzeugbahnen orientiert an einer zweiten Zeile von Punkten das Werkzeug relativ zu der jeweiligen Zeile von Punkten im Wesentlichen in Richtung der Rotationsachse des Werkzeugs derart verschoben und/oder rotiert ist, dass beim Abtragen von Material von dem Werkstück entlang der zweiten Werkzeugbahn ein Fräsbereich, eine Schneidkurve oder eine Schneidlinie auf der Umfangfläche des Werkzeugs im Vergleich zu dem Abtragen von Material von dem Werkstück entlang der ersten Werkzeugbahn im Wesentlichen in Richtung der Rotationsachse des Werkzeugs verschoben ist.

Vorzugsweise wird hierfür ein im Wesentlichen zylinderförmiges Werkzeug im Wesentlichen parallel zu der Rotationsachse verschoben. Vorzugsweise wird hierfür ein im Wesentlichen kegelförmiges Werkzeug im Wesentlichen parallel zu einer Tangentialebene der zu bearbeitenden Fläche des Werkstücks verschoben. Gegebenenfalls wird hierfür auch die Rotationsachse des Werkzeugs rotiert.

Dies hat den Vorteil, dass ein Werkzeugverschleiß des Werkzeugs weiter verringert werden kann, indem beim Abfahren von verschiedenen Werkzeugbahnen einer Mehrzahl von Werkzeugbahnen jeweils eine Positionierung des Werkzeugs relativ zu der Orientierung entsprechend der vorgegebenen Rotationsachse in Richtung der Rotationsachse verschoben ist, so dass ein Einsatzbereich bzw. Fräsbereich des Werkzeugs auf einer Umfangseite des Werkzeugs bzw. einer Schneidlinie des Werkzeugs bei Abfahren einer ersten Werkzeugbahn im Vergleich zum Abfahren einer zweiten Werkzeugbahn verschoben ist und jeweils ein anderer bzw. verschobener Einsatzbereich des Werkzeugs verwendet wird.

Somit kann durch Variation des Arbeitsbereichs des Werkzeugs auf der Umfangseite des rotierenden Werkzeugs ein Verschleiß des Werkzeugs verringert werden, da ein Einsatzbereich pro Werkzeugbahn und der daraus folgende Schneidenverschleiß entlang der Umfangsfläche des Werkzeugs verteilt wird bzw. sich auf weitere Bereiche längs der Schneide des Werkzeugs verteilt.

Dies ergibt den Vorteil, dass eine wesentlich längere Werkzeugstandzeit mit den Folgen geringerer Werkzeugkosten und Reduzierung von Nebenzeiten, z. B. Zeiten eines erforderlichen Werkzeugwechsels, sowie eine durch den geringeren Verschleiß bedingte, bessere Oberflächengüte und zudem geringere Geometriefehler an der Oberfläche des Werkstücks erreichbar sind. Zudem führt die Reduzierung des Erfordernisses eines Werkzeugwechsels zur Vermeidung von werkzeugwechselbedingten möglichen Fehlern aufgrund menschlichen Fehlverhaltens beim Werkzeugwechsel, z. B. durch Einwechseln eines falschen Ersatzwerkzeuges oder Eingabefehler bei der Definition der Werkzeugparameter des neu eingewechselten Werkzeugs.

Die oben genannte Verschiebung des Einsatzbereichs des Werkzeugs entlang der Rotationsachse des Werkzeugs ist auch unabhängig von den vorstehend beschriebenen Merkmalen einsetzbar, um die Aufgabe der vorliegenden Erfindung zu lösen, nämlich im Vergleich zum Stand der Technik ein Verfahren bereitzustellen, in dem eine bessere Oberflächengüte, geringere Geometriefehler und ein reduzierter Werkzeugverschleiß ermöglicht werden.

Somit wird erfindungsgemäß alternativ ein Verfahren vorgeschlagen zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils aus dem Werkstück durch abwälzendes Zerspanen, wobei das Verfahren die Schritte umfasst:
Erzeugen von Fertigteilgeometriedaten der vorbestimmten Fertigteilgeometrie des Fertigteils, wobei die Fertigteilgeometriedaten eine Geometrie des Fertigteils angeben, und
Erzeugen von Bahndaten anhand der Fertigteilgeometriedaten, wobei die Bahndaten angeben, welche zumindest zwei Werkzeugbahnen durch das Werkzeug jeweils mit welcher Werkzeugorientierung relativ zu dem Werkstück zum Abtragen von Material des Werkstücks abzufahren ist, wobei die Werkzeugorientierung des Werkzeugs einer Orientierung einer Rotationsachse des Werkzeugs entspricht und das Werkzeug zum Abtragen von Material des Werkstücks um die Rotationsachse des Werkzeugs rotiert und eine Längserstreckung entlang der Rotationsachse des Werkzeugs aufweist.

Das erfindungsgemäße Verfahren ist hierbei **dadurch gekennzeichnet, dass** die Bahndaten weiterhin derart erzeugt werden, dass das Werkzeug bei dem Abfahren einer ersten Werkzeugbahn der zwei Werkzeugbahnen im Vergleich zu dem Abfahren einer zweiten Werkzeugbahn der zwei Werkzeugbahnen im Wesentlichen in Richtung zu der Rotationsachse des Werkzeugs derart relativ verschoben und/oder rotiert ist, so dass beim Abtragen von Material von dem Werkstück entlang der zweiten Werkzeugbahn ein Fräsbereich, eine Schneidkurve oder eine Schneidlinie auf der Umfangfläche des Werkzeugs im Vergleich zu dem Abtragen von Material von dem Werkstück entlang der ersten Werkzeugbahn im Wesentlichen in Richtung der Rotationsachse des Werkzeugs verschoben ist.

Dies bietet den Vorteil, dass die vorstehend genannten Probleme des Stands der Technik beim Abfahren von mehreren Werkzeugbahnen in einem Bearbeitungsprozess, insbesondere bei einem Werkzeugvorschub im Wesentlichen senkrecht zur Rotationsachse des Werkzeugs, oder zumindest schräg zur Rotationsachse des Werkzeugs, gelöst werden können. Das Verfahren ermöglicht eine Reduktion des Werkzeugverschleißes, eine daraus folgende Verbesserung der erreichbaren Oberflächengüte und einer daraus folgenden Möglichkeit einer Bereitstellung eines optimalen Tragbildes. Dieses Verfahren lässt sich mit bevorzugten Ausführungsformen des alternativen Verfahrens, d. h. der Merkmale der Unteransprüche bzw. der vorstehend genannten Merkmale, kombinieren.

Vorzugsweise ist die Werkzeugmaschine hierbei eine Fräsmaschine, Dreh-/Fräsmaschine oder Fräs/Drehmaschine und das rotationssymmetrische Werkzeug vorzugsweise ein Fräswerkzeug oder ein anderes rotationssymmetrisches Werkzeug, insbesondere mit zylindrischer oder kegelförmiger rotationssymmetrischer Geometrie. Dies können z. B. rotationssymmetrische Standardwerkzeuge, wie z.B. Schaftfräser, Tonnenfräser, Torusfräser, Kugelfräser oder sonstige rotationssymmetrische Standardfräser sein.

Des Weiteren stellt die vorliegende Erfindung jeweils Vorrichtungen bereit, die dazu geeignet sind, eines der oben genannten Verfahren auszuführen. Dies ist insbesondere eine Vorrichtung zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils mit einem Grundkörper und zumindest einem von dem Grundkörper abstehenden Flankenabschnitt durch Zerspanen, mit:
einem Geometrieparameter-Bestimmungsmittel zum Festlegen bzw. Bestimmen grundlegender Geometrieparameter einer Fertigteilgeometrie des Fertigteils, wobei die Fertigteilgeometrie einer Geometrie des vorbestimmten Fertigteils entspricht,
einem Fertigteilgeometriedaten-Erzeugungsmittel zum Bestimmen bzw. Erzeugen von Fertigteilgeometriedaten der vorbestimmten Fertigteilgeometrie des Fertigteils anhand der grundlegenden Geometrieparameter, wobei die Fertigteilgeometriedaten zumindest eine Geometrie einer zumindest einen Fläche des zumindest einen Flankenabschnitts angeben, und
einem Bahndaten-Erzeugungsmittel zum Erzeugen von Bahndaten anhand der Fertigteilgeometriedaten, wobei die Bahndaten angeben, welche zumindest eine Werkzeugbahn entlang der zumindest einen Fläche des Flankenabschnitts das Werkzeug mit welcher Werkzeugorientierung relativ zu dem Werkstück zum Abtragen von Material des Werkstücks abzufahren soll, wobei das Werkzeug zum Abtragen von Material des Werkstücks um eine Rotationsachse des Werkzeugs rotiert.

Erfindungsgemäß ist die Vorrichtung zum Erzeugen von Steuerdaten **dadurch gekennzeichnet, dass** die Fertigteilgeometriedaten zum Angeben der Geometrie der zumindest einen Fläche des Flankenabschnitts Positionsdaten einer Gruppe von Punkten auf der zumindest einen Fläche des Flankenabschnitts umfassen, wobei die Positionsdaten eine Position der Punkte der Gruppe von Punkten angeben,
wobei jeder Punkt der Gruppe von Punkten einer Spalte von Punkten und einer Zeile von Punkten zugeordnet ist und wobei alle Punkte einer Spalte von Punkten in einer gemeinsamen Ebene liegen, wobei die gemeinsame Ebene der Punkte einer Spalte von Punkten im Wesentlichen senkrecht auf einer Tangentialebene der Mantelfläche des Grundkörpers steht,
wobei die Bahndaten derart erzeugt werden, dass die zumindest eine Werkzeugbahn im Wesentlichen parallel zu einer durch die Punkte einer ersten Zeile von Punkten verlaufende Kurve verläuft, und
wobei die Bahndaten weiterhin derart erzeugt werden, dass die Rotationsachse des Werkzeugs sich an jedem der Punkte der ersten Zeile von Punkten im Wesentlichen an der gemeinsamen Ebene der Spalte des jeweiligen Punkts der ersten Zeile orientiert.

Alternativ wird erfindungsgemäß eine Vorrichtung zum Erzeugen von Steuerdaten bereitgestellt zum Steuern eines Werkzeugs an einer zumindest 5 Achsen umfassenden Werkzeugmaschine zum Bearbeiten eines Werkstücks zum Herstellen eines vorbestimmten Fertigteils aus dem Werkstück durch Zerspanen, mit:
einem Fertigteilgeometriedaten-Erzeugungsmittel zum Bestimmen von Fertigteilgeometriedaten der vorbestimmten Fertigteilgeometrie des Fertigteils, wobei die Fertigteilgeometriedaten eine Geometrie des Fertigteils angeben,
einem Bahndaten-Erzeugungsmittel zum Erzeugen von Bahndaten anhand der Fertigteilgeometriedaten, wobei die Bahndaten angeben, welche zumindest zwei Werkzeugbahnen entlang der zumindest einen Fläche des Flankenabschnitts das Werkzeug jeweils mit welcher Werkzeugorientierung relativ zu dem Werkstück zum Abtragen von Material des Werkstücks abfahren soll, wobei das Werkzeug zum Abtragen von Material des Werkstücks um eine Rotationsachse des Werkzeugs rotiert und eine Längserstreckung entlang der Rotationsachse des Werkzeugs aufweist.

Die Vorrichtung zum Erzeugen von Steuerdaten ist **dadurch gekennzeichnet, dass** die Bahndaten weiterhin derart erzeugt werden, dass das Werkzeug bei dem Abfahren einer ersten Werkzeugbahn der zwei Werkzeugbahnen im Vergleich zu dem Abfahren einer zweiten Werkzeugbahn der zwei Werkzeugbahnen im Wesentlichen in Richtung der Rotationsachse des Werkzeugs derart relativ verschoben und/oder rotiert ist, so dass beim Abtragen von Material von dem Werkstück entlang der zweiten Werkzeugbahn ein Fräsbereich oder eine Schneidlinie auf der Umfangfläche des Werkzeugs im Vergleich zu dem Abtragen von Material von dem Werkstück entlang der ersten Werkzeugbahn im Wesentlichen in Richtung zu der Rotationsachse des Werkzeugs verschoben ist.

Die oben genannten Vorrichtungen sind dazu geeignet, eines oder mehrere der oben genannten Verfahren mit einem oder mehreren der vorstehend beschriebenen bevorzugten Merkmale auszuführen. Dazu umfassen die Vorrichtungen zum Erzeugen von Steuerdaten vorzugsweise weiterhin zumindest ein Punktdichtegrenzwert-Bestimmungsmittel zum Bestimmen von Punktdichtegrenzwerten zum Angeben von Grenzwerten für die Abstände zwischen zwei benachbarten Punkten einer Zeile und/oder einer Spalte von Punkten aus der Gruppe von Punkten auf der zumindest einen Fläche des zumindest einen Flankenabschnitts.

Des Weiteren stellt die vorliegende Erfindung ein Computerprogrammprodukt bereit, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind, von einem Datenverarbeitungsmittel einer Datenverarbeitungsrichtung verarbeitet zu werden, so dass die Datenverarbeitungseinrichtung in Verbindung mit dem Computerprogrammprodukt dazu geeignet ist, ein Verfahren nach zumindest einem der vorstehende beschriebenen Verfahren auszuführen. Somit stellt eine Datenverarbeitungseinrichtung in Verbindung mit dem Computerprogrammprodukt insbesondere eine erfindungsgemäße Ausführungsform einer Vorrichtung nach der vorliegenden Erfindung bereit.

### KURZBESCHREIBUNG DER FIGUREN

Fig. 1 zeigt eine beispielhafte, schematische Darstellung eines zumindest einen Flankenabschnitts entsprechend einer beispielhaften vorgegebenen Fertigteilgeometrie.
Fig. 2 zeigt eine beispielhafte, schematische Darstellung einer Fläche des in Fig. 1 abgebildeten Flankenabschnitts und deren Orientierung zu einer Oberfläche eines Grundkörpers der Fertigteilgeometrie.
Fig. 3 zeigt eine beispielhafte, schematische Darstellung der in Fig. 2 abgebildeten Fläche mit einer beispielhaften Darstellung einer Gruppe von Punkten nach einer Ausführungsform des Verfahrens zum Erzeugen von Steuerdaten nach der vorliegenden Erfindung.
Fig. 4 zeigt eine beispielhafte, schematische Darstellung eines Schnitts in der gemeinsamen Ebene einer Spalte von Punkten der Gruppe von Punkten nach einer Ausführungsform des Verfahrens zum Erzeugen von Steuerdaten nach der vorliegenden Erfindung.
Fig. 5 zeigt eine beispielhafte, schematische Darstellung einer Anstellung eines Werkzeugs an eine Fläche im Verhältnis zu einem der Punkte der Gruppe von Punkten mit einer Orientierung senkrecht zu einem Normalenvektor an dem Punkt nach einer Ausführungsform des Verfahrens zum Erzeugen von Steuerdaten nach der vorliegenden Erfindung.
Fig. 6 zeigt eine beispielhafte, schematische Darstellung einer Anstellung eines Werkzeugs an eine Fläche des Flankenabschnitts in einer im Vergleich zu der in Fig. 5 dargestellten Positionierung variierten Werkzeugpositionierung, die parallel zur Rotationsachse des Werkzeugs verschoben ist nach einer Ausführungsform des Verfahrens zum Erzeugen von Steuerdaten nach der vorliegenden Erfindung.
Fig. 7A und 7B zeigen beispielhafte, schematische Darstellungen einer Anstellung eines Schaftfräsers mit Eckenradius zum Formen eines abgerundeten Übergangsbereichs zwischen dem zumindest einem Flankenabschnitt und dem Grundkörper nach bevorzugten Ausführungsformen des Verfahrens zum Erzeugen von Steuerdaten nach der vorliegenden Erfindung.
Fig. 8 zeigt ein Ausführungsbeispiel der Vorrichtung zum Erzeugen von Steuerdaten nach einem Ausführungsbeispiel der vorliegenden Erfindung.

### DETAILLIERTE BESCHREIBUNG DER FIGUREN UND BEVORZUGTE AUSFÜHRUNGSBEISPIELE DER ERFINDUNG

Im Folgenden wir die vorliegende Erfindung detailliert anhand von Ausführungsbeispielen des Verfahrens und der Vorrichtung zum Erzeugen von Steuerdaten nach der vorliegenden Erfindung anhand beispielhafter Figuren beschrieben und erläutert.

Im Folgenden werden bevorzugte Ausführungsformen des Verfahrens zum Erzeugen von Steuerdaten zum Steuern eines Werkzeugs an einer zumindest 5 Achsen umfassenden Werkzeugmaschine in Bezug auf die Herstellung eines Fertigteils mit einem Grundkörper 1 und einem von dem Grundkörper 1 abstehenden Flankenabschnitt 2 mit einfacher Geometrie beschrieben.

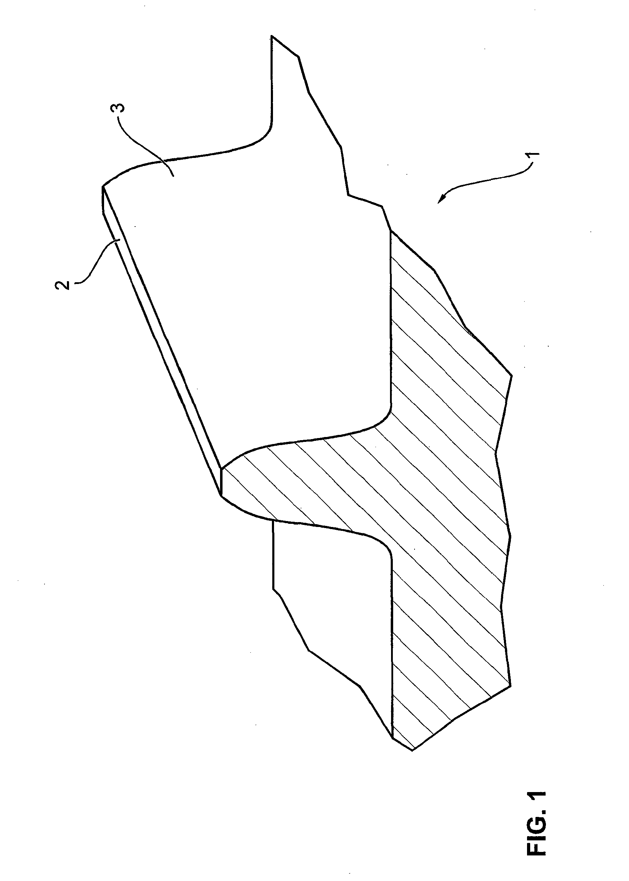

Ein Abschnitt eines beispielhaften Fertigteils mit einem Grundkörper 1 und einem von dem Grundkörper 1 abstehenden Flankenabschnitts 2 ist in Fig. 1 dargestellt. Der von dem Grundkörper 1 abstehende Flankenabschnitt 2 hat eine Fläche 3. Beispielhaft weist diese in Fig. 1 dargestellte Fläche 3 in Höhenerstreckung des Flankenabschnitts, in anderen Worten in der Richtung, in der der Flankenabschnitt 2 von dem Grundkörper 1 absteht, eine konvexe Krümmung auf. Jedoch hat die beispielhafte Fläche 3 in Längserstreckung des Flankenabschnitts 2 in Fig. 1 keine Krümmung.

Die vorliegende Erfindung ist jedoch nicht auf eine derartige Geometrie eines von einem Grundkörper abstehenden Flankenabschnitts 2 begrenzt. Vielmehr können mit dem erfindungsgemäßen Verfahren beliebige Werkstücke mit einem Grundkörper 1, insbesondere einem rotationssymmetrischen Grundkörper 1, und einem Flankenabschnitt 2 mit beliebigen Geometrien hergestellt werden. Insbesondere ermöglicht die vorliegende Erfindung das Herstellen von Stirnzahnrädern, Kegelzahnrädern, Blisks und Impellern mit jeweils komplexen vorbestimmten Geometrien.

In diesen Fällen entspricht ein Flankenabschnitt 2 jeweils einer Verzahnung eines Zahnrades oder eines Blattes eines Impellers oder Blisks. Insbesondere ermöglicht das erfindungsgemäße Verfahren die Herstellung von Stirnzahnrädern mit Innen- oder Außenverzahnung oder Kegelzahnrädern mit beliebigen Verzahnungsformen, insbesondere z. B. mit Geradverzahnung, Schrägverzahnung, Doppelschrägverzahnung oder Pfeilverzahnung, Kreisbogenverzahnung, Spiralverzahnung oder Evolventenverzahnung, wobei der Zahnflanken beliebige Krümmungen konvexer und/oder konkaver Ausformung umfassen können, z. B. in Form einer Evolvente.

Insbesondere ist es möglich, beliebige Flächen mit dem erfindungsgemäßen Verfahren zu formen, die beliebige, einseitige oder allseitige, konvexe und/oder konkave Krümmungen aufweisen können, z. B. auch beliebige, stetige Krümmungen aufweisende Freiformflächen.

Beispielhaft wird hier ein Ausführungsbeispiel des erfindungsgemäßen Verfahrens zum Erzeugen von Steuerdaten anhand eines Fertigteils beschrieben, dessen vorbestimmte Fertigteilgeometrie einen Grundkörper 1 umfasst, von dem ein Flankenabschnitt 2 wie in Fig. 1 dargestellt absteht. Das erfindungsgemäße Prinzip des Verfahrens zum Erzeugen von Steuerdaten wird dabei anhand dieses Beispiels anschaulich erklärt. Der Flankenabschnitt 2 entspricht dabei beispielhaft einer Flankenform, wie sie z. B. bei einem Zahnrad mit Geradverzahnung auftritt. Dementsprechend ist die in Fig. 1 dargestellte Fläche 3 des Flankenabschnitts 2 in Längsrichtung des Flankenabschnitts 2 geradlinig und weist in dieser Richtung keine Krümmung auf. In Höhenrichtung des Flankenabschnitts 2 ist die Fläche 3 beispielhaft konvex gekrümmt.

Der Einfachheit halber weist der dargestellte Abschnitt des Grundkörpers 1 in dem Bereich, in dem der Flankenabschnitt 2 vom Grundkörper 1 absteht, eine ebenflächige Form auf. Die vorliegende Erfindung ist jedoch nicht auf derartige Formen eines Grundkörpers beschränkt, sondern vielmehr kann der Grundkörper 1 gegebenenfalls rotationssymmetrischen Grundformen entsprechen, wobei ein Flankenabschnitt 2 von einer gekrümmten Außenfläche des Grundkörpers 1 absteht. Bei einem Stirnzahnrad wird der Grundkörper 1 z. B. gebildet durch einen zylinderförmigen Grundkörper und bei einem Kegelrad wird der Grundkörper 1 z. B. gebildet durch einem kegelförmigen Grundkörper oder zumindest durch einem rotationssymmetrischen Teilkegelkörper.

Bei der Herstellung von Zahnrädern, insbesondere Stirnzahnrädern oder Kegelzahnrädern, werden in der Praxis eine Mehrzahl Flankenabschnitte an dem Werkstück gefertigt, z. B. um eine Vielzahl von Zahnflanken zu bilden. Hierbei haben die einzelnen Flankenabschnitte 2 jeweils im Wesentlichen gleiche Geometrien bzw. geometrische Formen. Jedoch ist die vorliegende Erfindung nicht auf das Herstellen von Zahnrädern, insbesondere Stirnzahnrädern oder Kegelzahnrädern, beschränkt, sondern vielmehr können ebenfalls Werkstücke mit Grundkörpern und davon abstehenden Flankenabschnitten geformt werden, die jeweils eine unterschiedliche Geometrie bzw. geometrische Form aufweisen, z. B. Blätter eines Impellers oder Blisks.

Im Allgemeinen ist das vorliegende Verfahren anwendbar für das Herstellen von Werkstücken mit einem Grundkörper 1 und einem Flankenabschnitt 2, der von dem Grundkörper 1 absteht, weshalb im Folgenden Ausführungsformen des erfindungsgemäßen Verfahrens zum Erzeugen von Steuerdaten anhand eines Fertigteils beschrieben werden, wie es in Fig. 1 dargestellt ist, d. h. mit nur einem eine Fläche 3 aufweisenden Flankenabschnitt 2.

Die Form der Fläche 3 wird durch Zerspanen mit einem in eine zumindest 5 Achsen umfassende Werkzeugmaschine eingespannten Werkzeug entlang numerisch generierter Werkzeugbahnen zum Abtragen von Material des Werkstücks bearbeitet, bis die Fertigteilgeometrie des Fertigteils erreicht ist. Hierfür ist es erforderlich, Werkzeugbahnen zu generieren bzw. zu berechnen, entlang derer das Werkzeug geführt werden kann, um Material von dem Werkstück abzutragen, so dass die Fläche 3 entsprechend einer vorgegebenen geometrischen Form der Fläche 3 gebildet wird.

Erfindungsgemäß werden hierzu zuerst grundlegende Geometrieparameter des Fertigteils bestimmt, um Fertigteilgeometriedaten erzeugen zu können, die die geometrische Form der Fläche 3 des Flankenabschnitts 2 angeben. Derartige grundlegende Parameter umfassen z. B. Höhe und Längserstreckung des Flankenabschnitts 2, Krümmungsform der Fläche 3 in Längs- und Höhenerstreckung des Flankenabschnitts 2, eine Breite des Flankenabschnitts 2 und gegebenenfalls eine gewünschte Balligkeit der Fläche 3. Grundlegende Geometrieparameter können zum Beispiel an einem Rechner manuell eingegeben werden und/oder anhand technischer Vorgaben berechnet werden, z.B. computerunterstützt mit einem CAD/CAM-System.

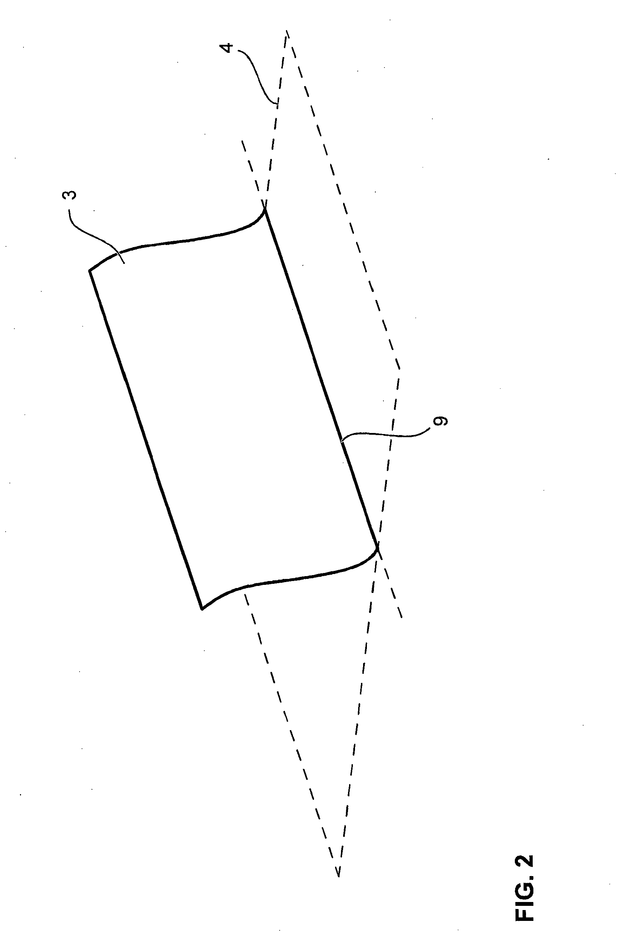

Fig. 2 zeigt beispielhaft die gewünschte geometrische Form der Fläche 3 des in Fig. 1 dargestellten Flankenabschnitts 2 und die relative Orientierung der Fläche 3 zu der Orientierung der geometrischen Mantelfläche 4 des in Fig. 1 dargestellten Grundkörpers 1, die Fig. 2 gestrichelt dargestellt ist.

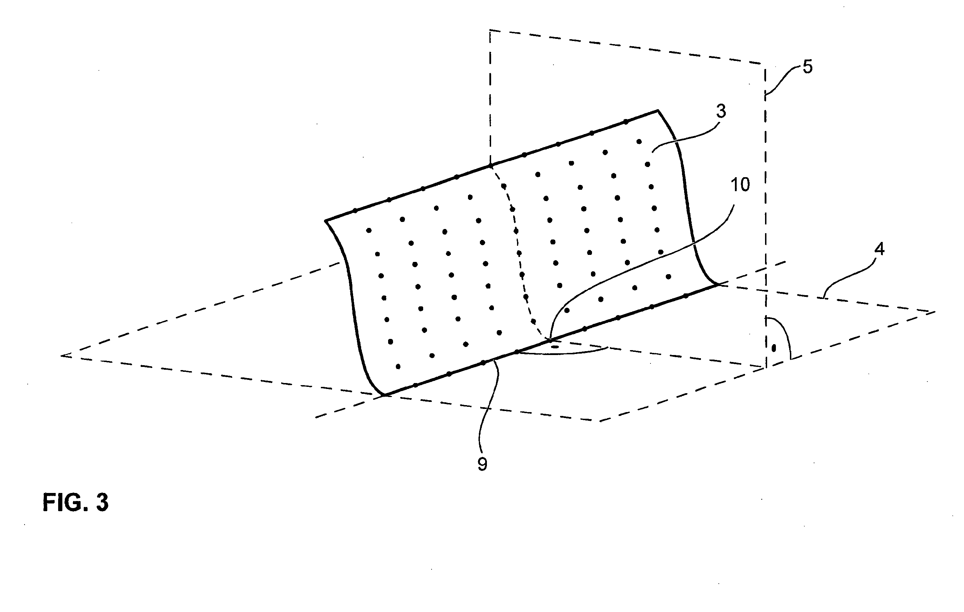

Fig. 3 zeigt die schematische Darstellung der geometrischen Form der Fläche 3 aus Fig. 2 zusammen mit einer Gruppe von Punkten auf der Fläche 3, die es erfindungsgemäß erlauben, die geometrische Form der Fläche 3 mathematisch exakt zu beschreiben. Erfindungsgemäß ist die Gruppe von Punkten auf der Fläche 3 des Flankenabschnitts 2 derart angeordnet, dass jeder Punkt der Gruppe von Punkten einer Zeile von Punkten und einer Spalte von Punkten zugeordnet ist.

Wie in Fig. 3 dargestellt, wird die Gruppe von Punkten derart auf der Fläche 3 angeordnet, dass die Punkte, die einer Spalte zugeordnet sind, auf einer gemeinsamen Ebene 5 liegen, die ihrerseits senkrecht auf der Orientierung der Mantelfläche 4 des Grundkörpers 1 steht. Bei einer Herstellung von Zahnrädern ist die geometrische Außenfläche 4 des Grundkörpers 1 im Normalfall anders als in den Figuren dargestellt zumindest einseitig gekrümmt und entspricht bei einem Stirnrad einer geometrischen Mantelfläche 4 eines Zylinders oder Hohlzylinders und bei einem Kegelzahnrad einer gekrümmten geometrischen Mantelfläche 4 eines Kegels oder rotationssymmetrischen Teilkegels. In einem derartigen Fall werden die Punkte der Gruppe von Punkten auf der Fläche 3 des Flankenabschnitts 2 derart angeordnet, dass eine gemeinsame Ebene 5, in der alle Punkte einer Spalte liegen, senkrecht zu einer Tangentialebene einer geometrischen Außenfläche des Grundkörpers 1 liegen. Hierfür ist diese Tangentialebene eine tangentiale Ebene in einem gemeinsamen Punkt 10 der Mantelfläche des Grundkörpers mit der gemeinsamen Ebene 5. Die Orientierung der gemeinsamen Ebene kann vorteilhaft senkrecht zu einer Leitkurve 9 orientiert sein, wobei die Leitkurve 9 eine auf der Mantelfläche des Grundkörpers verlaufende Kurve ist. Bei einer Fertigung eines Zahnrades kann die Leitkurve hierbei insbesondere vorteilhaft auf dem Zahngrund zwischen zwei Zähnen der Verzahnung verlaufen.

Im Schritt Erzeugen von Fertigteilgeometriedaten werden Positionsdaten erzeugt, wobei die Positionsdaten die exakte geometrische Position aller Punkte auf der Fläche 3 angeben, wobei die Positionsdaten zu jedem der Punkte der Gruppe von Punkten eine Information über die Lage des Punktes in dem dreidimensionalen Raum angibt. Des Weiteren werden in diesem Ausführungsbeispiel des Verfahrens zum Erzeugen von Steuerdaten nach der vorliegenden Erfindung weiterhin Normalendaten erzeugt, die zu jedem Punkt der Gruppe von Punkten neben den Positionsdaten weiterhin einen Normalenvektor der Fläche 3 an dem jeweiligen Punkt angeben.

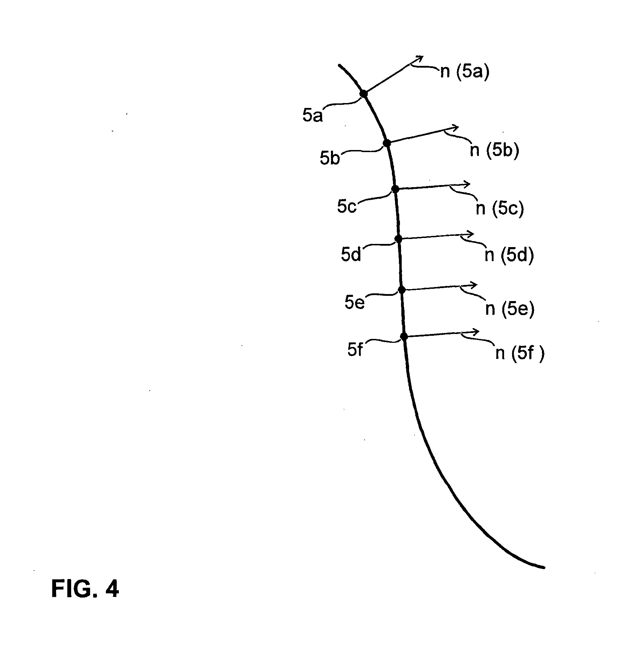

Dies ist in Fig. 4 dargestellt, die beispielhaft die Punkte 5a, 5b, 5c, 5d, 5e und 5f zeigt, die alle der gleichen Spalte von Punkten zugeordnet sind und in einer gemeinsamen Ebene 5 liegen, die der Zeichenebene der Fig. 4 entspricht. Fig. 4 zeigt des Weiteren eine Schnittkurve der Fläche 3 mit der gemeinsamen Ebene 5. Die Normalenvektoren n(5a) bis n(5f) stellen die jeweiligen Normalenvektoren an den Punkten 5a bis 5f dar, die in den Punkten 5a bis 5f jeweils senkrecht zu der Fläche 3 stehen und somit eine Orientierung der Fläche 3 in den Punkten 5a bis 5f beschreiben. Somit umfassen die Fertigteilgeometriedaten sowohl die Positionsdaten, die die Position der Punkte angeben und die Normalendaten, die die Orientierung der Fläche 3 an diesen Punkten angeben.

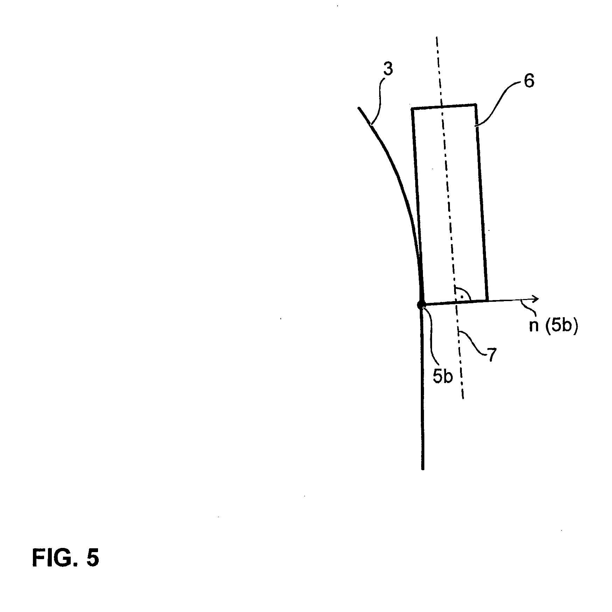

Dies ermöglicht es, auf besonders einfache Art und Weise mathematisch exakt Daten bereitzustellen, anhand derer die Berechnung der Bahndaten zum Steuern des Werkzeugs 6 vorteilhaft erfolgen kann. Dies ist beispielhaft in Fig. 5 für einen Punkt 5d gezeigt. Es ist eine Schnittkurve der Fläche 3 mit der gemeinsamen Ebene 5 der Punkte 5a bis 5f gezeigt, wobei die Zeichenebene der Fig. 5 der gemeinsamen Ebene 5 entspricht. Das Werkzeug 6, das um die Rotationsachse 7 des Werkzeugs 6 zum Abtragen von Material von dem Werkstück rotiert, kann mathematisch exakt anhand der Fertigteilgeometriedaten bestimmt werden, da sich die Werkzeugposition exakt an den Positionsdaten, die die Position des Punktes 5b angeben, orientieren kann, wobei zusätzlich zu der Position des Werkzeugs die Orientierung des Werkzeugs, die der Orientierung der Rotationsachse 7 des Werkzeugs 6 entspricht, anhand der Normalendaten an dem Punkt 5b orientiert werden kann, indem das Werkzeug 6 senkrecht zu dem Normalenvektor n(5b) angesteuert wird, so dass die Rotationsachse 7 senkrecht auf dem Normalenvektor im Punkt 5b steht, also parallel zur Tangentialebene der Fläche 3 im Punkt 5b. Indem erfindungsgemäß die Orientierung des Werkzeugs weiterhin nach diesem Ausführungsbeispiel der vorliegenden Erfindung in der gemeinsamen Ebene 5 liegt, kann die Werkzeugführung mathematisch exakt anhand der Positionsdaten des Punkts 5b und den dazugehörigen Normalendaten orientiert werden.

Zum Erzeugen von Steuerdaten werden nun Bahndaten berechnet bzw. generiert, wobei genau Bahnen berechnet werden, die das Werkzeug 6 parallel zu einer Kurve führen, die durch alle Punkte einer Zeile der Gruppe von Punkten auf der Fläche 3 führt. Da zu allen Punkten einer Zeile Positionsdaten und Normalendaten generiert werden, kann die Bahnberechnung entlang einer Zeile von Punkten mathematisch exakt auf einfache Art und Weise generiert werden.

Somit wird eine Mehrzahl von Bearbeitungsbahnen berechnet, bzw. Bahndaten für eine Mehrzahl von Werkzeugbahnen erzeugt, wobei jede der Werkzeugbahnen parallel zu einer Zeile von Punkten der Gruppe von Punkten auf der Fläche 3 geführt ist. Dementsprechend ist die Anzahl der Werkzeugbahnen gleich der Zahl der Zeilen von Punkten. Dementsprechend umfasst die Gruppe von Punkten Spalten von Punkten, die jeweils die gleiche Anzahl von Punkten umfassen, so dass jeder Punkt einer Zeile zugeordnet werden kann und keine der Zeilen sich mit einer anderen Zeile überschneidet.

Vor Erzeugen der Fertigteilgeometriedaten können weiterhin Punktdichtegrenzwerte eingegeben werden, durch die Grenzwerte für minimale bzw. maximale Abstände zwischen zwei benachbarten Punkten einer Zeile und/oder Spalte festgelegt werden können, oder auch Grenzwerte für Minimal- bzw. Maximalwerte eines durchschnittlichen Abstands zwischen zwei benachbarten Punkten einer Zeile und/oder Spalte der Gruppe von Punkten.

Die Eingabe bzw. das Vorgeben derartiger Punktdichtegrenzwerte kann erforderlich sein, da bei komplexeren geometrischen Formen von Flächen 3 gegebenenfalls mit konvexer oder konkaver Krümmung in verschiedene Richtungen Zeilen von Punkten und/oder Spalten von Punkten jeweils im Abstand variieren können und im Allgemeinen nicht wie im Fall der beispielhaften Darstellung in Fig. 3 mit gleichen bzw. gleichbleibenden Abständen generiert werden.

So kann erfindungsgemäß vorteilhaft sichergestellt werden, dass die Werkzeugführung anhand der erzeugten Bahndaten derart ausgeführt wird, dass die Orientierung des Werkzeugs stets in einer Ebene liegt, die senkrecht zu dem Grundkörper 1 liegt. Somit kann folglich vermieden werden, dass das Werkzeug 6 beim Durchfahren von berechneten Werkzeugbahnen nicht wie in Verfahren, die an isoparametrischen Kurven orientiert sind, unnötig eine Schrägstellung relativ zu dem Grundkörper einnimmt bzw. stetig oder unstetig in eine schräggestellte Orientierung zur Bahnachse bzw. Bahntangente übergeht.

Somit bietet das erfindungsgemäße Verfahren im Gegensatz zu an isoparameter Kurven orientierten Verfahren des Standes der Technik den Vorteil, dass unnötige und unstetige Rundachsbewegungen bei Durchfahren der berechneten Werkzeugbahnen durch das Werkzeug 6 vermieden bzw. verhindert werden können, wodurch zusätzlich vorteilhaft eine optimierte Oberflächengüte erreicht werden kann. Dies ermöglicht eine exakte Formung der Fläche 3 mit exakter Einstellung eines gewünschten Tragbildes, so dass insbesondere bei der Herstellung von Zahnrädern Flankenflächen geformt werden können, die ein optimiertes Abrollverhalten beim Abrollen eines Zahnrades an der Flanke eines Gegenzahnrades ermöglichen, wodurch weiterhin Laufgeräusche beim Abrollen eines derart hergestellten Zahnrades an dem Gegenzahnrad geräuschvermindert bzw. geräuschoptimiert ermöglicht wird.

In einem weiteren Ausführungsbeispiel des Verfahrens zum Erzeugen von Steuerdaten nach der vorliegenden Erfindung werden eine Vielzahl von Bearbeitungsbahnen berechnet, wobei jede der Bearbeitungsbahnen entlang einer Zeile von Punkten der Gruppe von Punkten geführt wird, wobei jede Bahn derart berechnet wird, dass das Werkzeug entlang der Bahn jeweils mathematisch exakt an den Punkten auf der Fläche 3 der Zeile, zu der die Bahn parallel berechnet wird, an den Positionsdaten der Punkte der Zeile und den Normalendaten, wie vorstehend beschrieben, orientiert ist.

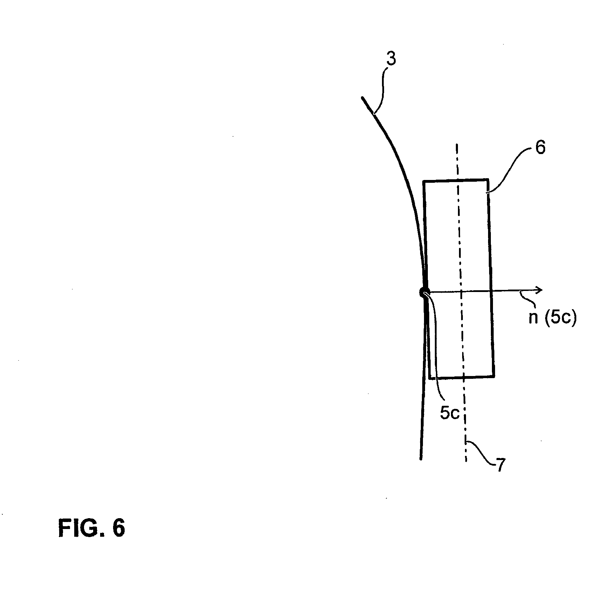

Jedoch wird in diesem Ausführungsbeispiel bei der Berechnung einer ersten Werkzeugbahn und einer Berechnung einer zweiten Werkzeugbahn im Vergleich zwischen der ersten und der zweiten Werkzeugbahn eine relative Werkzeugposition in Richtung bzw. parallel zu der Rotationsachse 7 des Werkzeugs 6 verschoben. Dies wird illustriert durch die Figuren 5 und 6, die beispielhaft eine Stellung des Werkzeugs 6 an den Punkten 5b in Fig. 5 und 5c in Fig. 6 darstellen. In Fig. 5 ist die Position des Werkzeugs 6 derart orientiert, dass die Unterseite des Werkzeugs auf Höhe der Punktes 5b platziert wird. Da die Fläche 3 eine Krümmung, in diesem Beispiel eine konvexe Krümmung aufweist, beschränkt sich ein Einsatzbereich des Werkzeugs 6 beim Abfahren der Bahn entlang der Zeile der Punkte, zu der der Punkt 5b zugeordnet ist, auf einen unteren Bereich des Werkzeugs 6, und das Werkzeug 6 wird gegebenenfalls im oberen Bereich aufgrund der Krümmung der Fläche 3 nicht oder zumindest geringfügiger beansprucht als im unteren Teil des Werkzeugs 6.

In Fig. 6 ist die Werkzeuganstellung an einem Punkt 5c dargestellt, wobei eine relative Position des Werkzeugs 6 zu dem Punkt 5c parallel zu der Rotationsachse 7 des Werkzeugs 6 verschoben ist, so dass ein Einsatzbereich des Werkzeugs 6 parallel zu der Rotationsachse 7 des Werkzeugs 6 verschoben ist. In anderen Worten wird eine Bahnberechnung derart ausgeführt, dass in einer Bahnführung entlang einer ersten Zeile von Punkten im Vergleich zu einer Bahnführung entlang einer zweiten Zeile von Punkten das Werkzeug relativ in Richtung der Rotationsachse 7 des Werkzeugs verschoben ist, so dass ein Einsatzbereich bzw. eine Schneidlinie auf der Umfangseite des Werkzeugs 6 verschoben ist. Somit werden Bahndaten derart erzeugt, dass bei einem Abfahren einer ersten Bahn gegebenenfalls andere Bereiche des Werkzeugs 6 als beim Abfahren einer zweiten Bahn beansprucht werden, so dass ein Verschleiß des Werkzeugs 6 verringert werden kann, da Verschleißerscheinungen auf eine Längsausdehnung des Werkzeugs 6 verteilt werden.

In anderen Worten verschiebt sich somit der Einsatzbereich pro Werkzeugbahn und der Verschleiß der Schneiden des Werkzeugs 6 verteilt sich von einer einzigen Position an einer empfindlichen Stelle, wie z. B. der Spitze des Werkzeugs, auf einen weiteren Bereich längs der Schneide.

Das vorstehend beschriebene Ausführungsbeispiel ist anwendbar bei im Wesentlichen zylinderförmigen Werkzeugen. Bei im Wesentlichen kegelförmigen Werkzeugen wird aufgrund der Werkzeugform zum Erreichen des ähnlichen Vorteils erfindungsgemäß nicht wie vorstehend beschrieben parallel in Richtung der Rotationsachse des Werkzeugs verschoben, sondern im Wesentlichen parallel zu der zu bearbeitenden Fläche in einer je nach Anstellungswinkel des Werkzeugs im Wesentlichen in Richtung der Rotationsachse des Werkzeugs verschoben, gegebenenfalls sogar in Verbindung mit einer Rotation der Rotationsachse.

Insgesamt ermöglichen es die vorstehend beschriebenen Verfahren vorteilhaft wesentlich längere Werkzeugstandzeiten mit einer daraus folgenden Verringerung der Werkzeugkosten und einer Reduzierung von Nebenzeiten, z. B. erzeugt durch erforderliche Werkzeugwechsel durch erhöhten Verschleiß. Weiterhin ermöglicht dies zusätzlich eine Optimierung der Oberflächengüte, da die Oberflächengüte von einem Verschleißzustand des Werkzeugs 6 beeinflusst wird, wodurch zusätzlich verschleißbedingte Geometriefehler am Werkstück vermieden werden können. Des Weiteren führt dies zur Vermeidung von Problemen aufgrund von manuellen Fehlern aufgrund eines menschlichen Fehlverhaltens, wie z. B. Einwechseln eines falschen Ersatzwerkzeugs oder Eingabefehler bei einer Definition der Werkzeugparameter des eingewechselten Ersatzwerkzeugs.

Unabhängig von der vorstehend beschriebenen Generierung der Bahndaten anhand der Gruppe von Punkten ermöglicht es die Erfindung zudem, die vorstehend beschriebenen Vorteile zu erreichen, indem im Allgemeinen bei einer Erzeugung von Steuerdaten für einen Fräsprozess entlang zumindest zwei berechneter Werkzeugbahnen eine relative Werkzeugposition zwischen Abfahren der ersten und Abfahren der zweiten Werkzeugbahn in Richtung der Rotationsachse 7 des Werkzeugs 6 verschoben ist, wie es im Vergleich der Figuren 5 und 6 dargestellt ist.

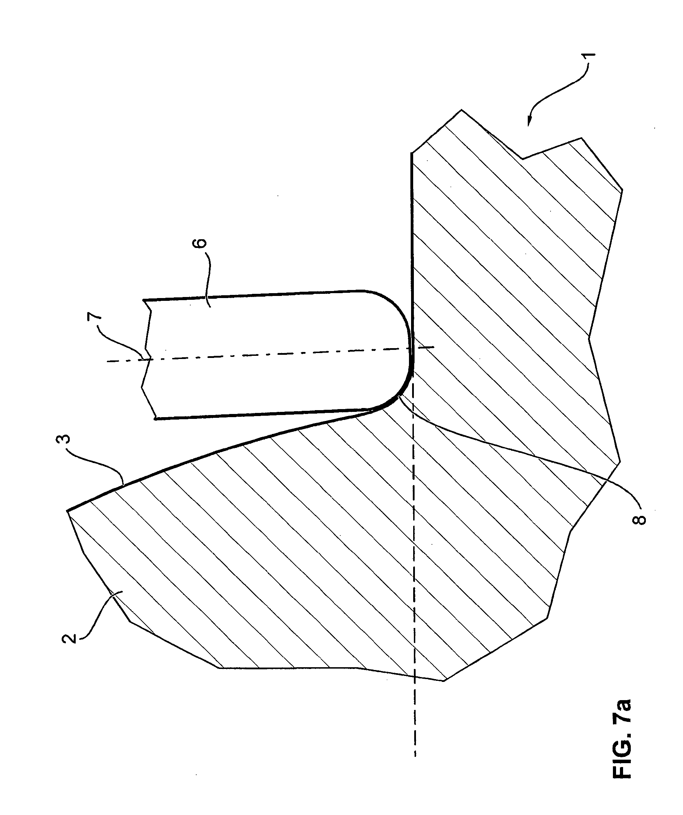

In einer speziellen Ausführungsform des Verfahrens zum Erzeugen von Steuerdaten wird zudem beispielhaft, wie in Fig. 7A gezeigt, ein Schaftfräser mit einem abgerundeten Eckenradius an der Spitze verwendet, der es ermöglicht, eine Bahn derart zu berechnen, dass eine letzte bzw. tiefste Werkzeugbahn parallel zu einem Fußverlauf der Fläche 3 des Flankenabschnitts 2 berechnet wird, wobei gleichzeitig bei Abfahren der Bahn durch den abgerundeten Eckenradius des Schaftfräsers 6 ein abgerundeter Übergangsbereich 8 zwischen dem Flankenabschnitt 2 und dem Grundkörper 1 geformt werden kann. Der Radius des abgerundeten Übergangsbereichs 8 kann hierbei durch geeignete Auswahl des Schaftfräsers 6 mit einem entsprechend gewählten Eckenradius festgelegt werden, da der Radius des abgerundeten Übergangsbereichs 8 nach Abfahren der berechneten, tiefsten Bahn durch den Schaftfräser 6 im Wesentlichen dem Radius des Eckradius des Schaftfräsers 6 entspricht.

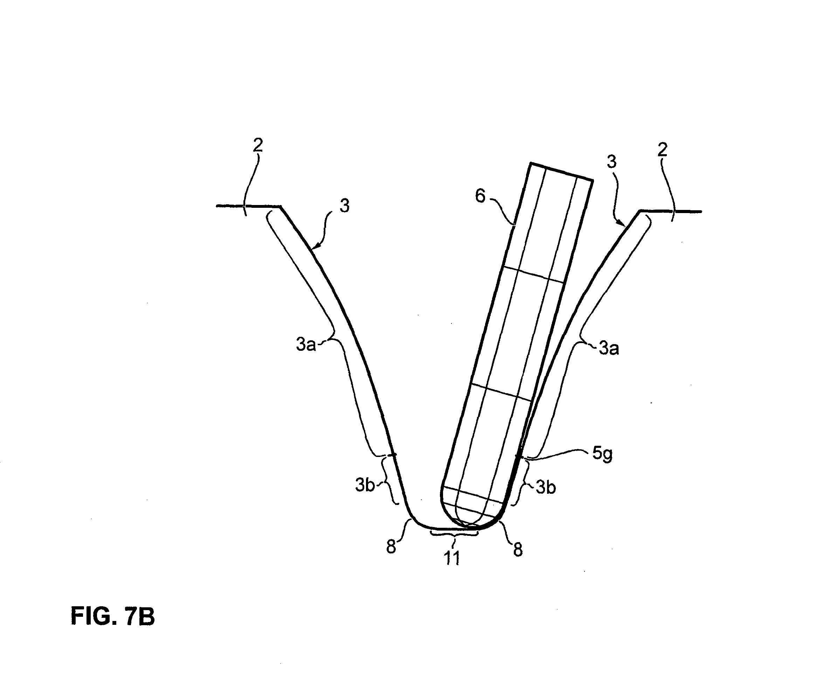

Fig. 7B zeigt eine bevorzugte Ausführungsform des Verfahrens zum Erzeugen von Steuerdaten bei dem zudem eine letzte bzw. tiefste Werkzeugbahn für einen Schaftfräser 6 mit einem abgerundeten Schaftfräser derart berechnet wird, dass der Schaftfräser 6 bei Abfahren der Bahn orientiert an der Leitkurve 9 am Übergang zwischen Zahngrund und Zahnflanke einen abgerundeten Übergangsbereich 8 sowie einen Tangentialabschnitt 3b an der Fläche 3 des Flankenabschnitts 2 zwischen dem Grundkörper 1 und dem verzahnungsaktiven ZahnflankenAbschnitt 3a ausformt bzw. herausarbeitet. Der verzahnungsaktive Zahnflankenabschnitt 3a beschreibt hierbei im Wesentlichen denjenigen Abschnitt der Fläche 3 des Flankenabschnitts 2, der bei aneinander abrollender Verzahnung und Gegenverzahnung bzw. Flanke und Gegenflanke mit der entsprechenden Gegenflanke in Kontakt kommt und bevorzugt eine der jeweiligen Verzahnungsform entsprechende Krümmung aufweist. Bevorzugt kann noch ein Sicherheitsabstand vorgesehen sein, der die Krümmung der Verzahnungsform über den Bereich, der bei aneinander abrollender Verzahnung und Gegenverzahnung bzw. Flanke und Gegenflanke mit der entsprechenden Gegenflanke in Kontakt kommt, hinaus.

Der Tangentialabschnitt 3b entspricht im in Fig. 7B gezeigten Querschnitt im Wesentlichen einer Gerade und geht auf der unteren Seite direkt in den abgerundeten Übergangsbereich 8 und auf der oberen Seite direkt in den verzahnungsaktiven Zahnflankenabschnitt 3a über. Hierbei wird der Schaftfräser 6 gemäß diesem bevorzugten Ausführungsbeispiel am tiefsten Punkt 5g des verzahnungsaktiven Zahnflankenabschnitts 3a tangential an den verzahnungsaktiven Zahnflankenabschnitt 3a angestellt, um den Tangentialabschnitt 3b sowie den abgerundeten Bereich 8 gleichzeitig bei dem Abfahren der berechneten, tiefsten Zeile bzw. Bahn orientiert an der Leitkurve 9 zu formen bzw. herauszuarbeiten. Die Höhe des Tangentialabschnitts 3b, d.h. der Abstand zwischen dem abgerundeten Übergangsbereich 8 und dem verzahnungsaktiven Zahnflankenabschnitt 3a, kann hierbei als Vorgabe für die Bahnberechnung frei gewählt bzw. eingestellt werden. Des Weiteren ist in Fig. 7B beispielhaft gezeigt, dass zwischen zwei abgerundeten Übergangsbereichen 8 auf zwei gegenüberliegenden Seiten des Zahngrunds noch ein tangentialer Übergangsbereich 11 ausgebildet ist, der auf beiden Seiten im Wesentlichen tangential in den jeweiligen abgerundeten Übergangsbereich 8 übergeht.

Somit kann eine Zahnflanke herausgearbeitet werden, die unterhalb des verzahnungsaktiven Zahnflankenabschnitts 3 noch einen Tangentialabschnitt 3b aufweist, der zusammen mit dem abgerundeten Bereich 8 durch das Abfahren nur einer Werkzeugbahn mit dem Schaftfräser 6 schnell und effizient herausgearbeitet werden kann.

Zusammenfassend ermöglicht die Formung insbesondere von Zahnrädern an einer 5-Achs-Werkzeugmaschine nach den vorstehend beschriebenen Verfahren eine hohe Flexibilität, wobei zudem Lücken zwischen zwei Zahnflanken in einem Bereich außerhalb eines wälztechnisch bzw. abrolltechnisch relevanten Bereichs (in welchem Bereich Berührungen beim Abrollen mit einer Flanke eines Gegenrades entstehen) besonders frei gestaltet werden können.

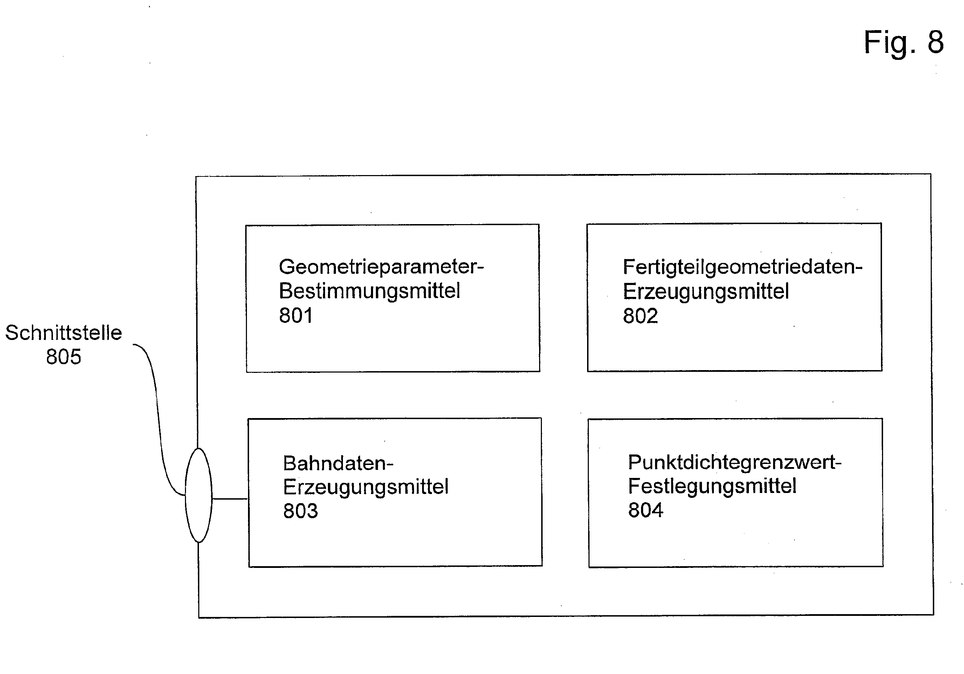

Zum Ausführen der vorstehend beschriebenen Verfahren zum Erzeugen von Steuerdaten zum Steuern eines Werkzeugs an einer zumindest 5 Achsen umfassenden Werkzeugmaschine wird weiterhin eine Vorrichtung 800 zum Erzeugen von Steuerdaten bereitgestellt, die dazu geeignet ist, zumindest eines der vorstehend beschriebenen Ausführungsbeispiele eines Verfahrens zum Erzeugen von Steuerdaten auszuführen. Ein Ausführungsbeispiel der Vorrichtung 800 ist in Fig. 8 dargestellt.

Die Vorrichtung 800 umfasst hierbei ein Geometrieparameter-Bestimmungsmittel 801 zum Bestimmen grundlegender Geometrieparameter einer Fertigteilgeometrie des Fertigteils, wobei das Geometrieparameter-Bestimmungsmittel 801 dazu geeignet ist, grundlegende Geometrieparameter der Fertigteilgeometrie des Fertigteils einzugeben und/oder anhand von einer Eingabe von Parametern zu generieren.

Die Vorrichtung 800 umfasst weiterhin ein Fertigteilgeometriedaten-Erzeugungsmittel 802, das dazu geeignet ist, Fertigteilgeometriedaten der vorbestimmten Fertigteilgeometrie anhand der grundlegenden Geometrieparameter zu erzeugen, wobei das Fertigteilgeometriedaten-Erzeugungsmittel 802 insbesondere dazu geeignet ist, Fertigteilgeometriedaten, die eine Fläche 3 eines Flankenabschnitts 2 beschreiben durch eine Gruppe von Punkten, wobei die Fertigteilgeometriedaten Positionsdaten und Normalendaten, wie vorstehend beschrieben, umfassen.

Weiterhin umfasst die Vorrichtung 800 ein Bahndaten-Erzeugungsmittel 803 zum Erzeugen von Bahndaten anhand der Fertigteilgeometriedaten nach zumindest einem der vorstehend beschriebenen Ausführungsbeispiele des Verfahrens zum Erzeugen von Steuerdaten. Insbesondere ist das Bahndaten-Erzeugungsmittel 803 dazu geeignet, anhand der Positionsdaten und Normalendaten der Fertigteilgeometriedaten eine oder mehrere Werkzeugbahnen zu berechnen, wobei die Positionierung des Werkzeugs entlang einer Werkzeugbahn anhand der Positionsdaten der Punkte orientiert ist und die Werkzeugorientierung anhand der Normalendaten an den Punkten orientiert ist, wobei zudem eine Werkzeugorientierung an einer gemeinsamen Ebene einer Spalte von Punkten der Gruppe von Punkten, wie vorstehend beschrieben, orientiert ist.

Des Weiteren umfasst die Vorrichtung 800 ein Punktdichtegrenzwert-Festlegungsmittel 804, das dazu geeignet ist, Punktdichtegrenzwerte festzulegen, z. B. durch manuelle Eingabe, durch die Minimal- bzw. Maximalabstände von benachbarten Punkten einer Zeile bzw. einer Spalte von Punkten festgelegt werden können und/oder die weiterhin dazu geeignet ist, Punktdichtegrenzwerte festzulegen, z. B. durch manuelle Eingabe, die einen Minimal- bzw. Maximalwert für einen durchschnittlichen Abstand zwischen zwei benachbarten Punkten einer Zeile und/oder Spalte der Gruppe von Punkten ermöglicht.

Schließlich umfasst die Vorrichtung 800 eine Schnittstelle 805, die es ermöglicht, die berechneten bzw. generierten Bahndaten als Steuerdaten oder als Teil von Steuerdaten an eine Werkzeugmaschine oder ein Speichermittel zu übermitteln, so dass die Steuerdaten an eine Steuervorrichtung der Werkzeugmaschine übertragen werden können, um ein in der Werkzeugmaschine eingesetztes Werkzeug anhand der Bahndaten bzw. Steuerdaten zu steuern, um ein in der Werkzeugmaschine eingespanntes Werkstück zu bearbeiten.

Zusammenfassend wird durch das erfindungsgemäße Verfahren und die erfindungsgemäße Vorrichtung zum Erzeugen von Steuerdaten zum Steuern eines Werkzeugs an einer zumindest 5 Achsen umfassenden Werkzeugmaschine zum Bearbeiten eines Werkstücks zum Herstellen eines vorbestimmten Fertigteils mit einem Grundkörper 1 und einem von dem Grundkörper abstehenden Flankenabschnitts durch Zerspanen bereitgestellt, bei dem mittels eines speziellen neuen Berechnungsalgorithmus ein Abwälzprozess simuliert wird, wobei in einstellbaren Abständen exakte Punkt-Vektor-Folgen auf der Fläche der Zahnflanke errechnet werden können, an der eine Bahnberechnung für ein Werkzeug an einer Werkzeugmaschine mathematisch exakt und einfach ermöglicht wird.

Sowohl die Werkzeugposition als auch die Anstellung bzw. Orientierung des Werkzeugs an die Fläche, die gegebenenfalls einer beliebigen Freiformfläche entsprechen kann, werden nicht durch Annäherung bzw. Approximation, sondern mathematisch exakt auf Basis der ermittelten Position von Punkten und Normalenvektoren berechnet. Die Bearbeitung durch das Werkzeug der Flächen, z. B. von Zahnflanken, kann somit erfindungsgemäß effizient und flexibel mit Standardwerkzeugen an einer 5 Achsen umfassenden Werkzeugmaschine erfolgen, bei der besonders vorteilhaft, im Gegensatz zu einer herkömmlichen Bearbeitung auf konventionellen Zahnradfräsmaschinen, ein beliebiges gewünschtes, gegebenenfalls auch mehrteiliges Tragbild erzeugt werden kann.

Insbesondere optimiert das erfindungsgemäße Verfahren zum Erzeugen von Steuerdaten zum Steuern eines Werkzeugs zum Bearbeiten eines Werkstücks zum Herstellen eines vorbestimmten Fertigteils mit einem Grundkörper und einem von dem Grundkörper abstehenden Flankenabschnitt durch Zerspanen die aus dem Stand der Technik bekannten Verfahren zum Erzeugen von Steuerdaten an bekannten CAD/CAM-Systemen, bei denen eine Werkzeugorientierung anhand vertikaler isoparametrischer Kurven auf der Fläche orientiert ist. Unnötige Variationen einer Schrägstellung des Werkzeugs im Verhältnis zu der Mantelfläche des Grundkörpers können vermieden werden, so dass bei dem erfindungsgemäßen Verfahren im Gegensatz zum Stand der Technik unnötige, unregelmäßige und zudem zerspanungstechnisch ungünstige Anstellungen des Werkzeugs zu der zu zerspanenden Fläche mit der Folge mangelhafter Oberflächengüte, geometrischen Fehlern und erhöhtem Verschleiß am Werkzeug vermieden werden können. Gleichzeitig können Schwenkbewegungen vermieden werden, die zu unstetigen Rundachsbewegungen der Fräsmaschine und daraus folgenden unstetigen Bewegungen des Werkzeugs entlang der Bahn führen können.

Das vorstehend beschriebene Verfahren und die entsprechende Vorrichtung zum Erzeugen von Steuerdaten stellen dementsprechend ein optimiertes Verfahren und eine optimierte Vorrichtung im Gegensatz zu dem aus dem Stand der Technik bekannten Verfahren und Vorrichtungen dar.

## Patentansprüche

1. Verfahren zum Erzeugen von Steuerdaten zum Steuern eines Werkzeugs an einer zumindest 5-Achsen umfassenden Werkzeugmaschine zum Bearbeiten eines Werkstücks zum Herstellen eines vorbestimmten Fertigteils mit einem Grundkörper (1) und zumindest einem von dem Grundkörper (1) abstehenden Flankenabschnitt (2) durch Zerspanen, wobei
das Verfahren die Schritte umfasst:
- Bestimmen grundlegender Geometrieparameter einer Fertigteilgeometrie des Fertigteils, wobei die Fertigteilgeometrie einer Geometrie des vorbestimmten Fertigteils entspricht,
- Erzeugen von Fertigteilgeometriedaten der vorbestimmten Fertigteilgeometrie des Fertigteils anhand der grundlegenden Geometrieparameter, wobei die Fertigteilgeometriedaten eine geometrische Form einer Fläche (3) des Flankenabschnitts (2) angeben, und
- Erzeugen von Bahndaten anhand der Fertigteilgeometriedaten, wobei die Bahndaten angeben, welche Werkzeugbahn entlang der Fläche (3) des Flankenabschnitts (2) durch das Werkzeug mit welcher Werkzeugorientierung relativ zu dem Werkstück zum Abtragen von Material des Werkstücks abzufahren ist, wobei die Werkzeugorientierung des Werkzeugs (6) einer Orientierung einer Rotationsachse (7) des Werkzeugs (6) entspricht und das Werkzeug (6) zum Abtragen von Material des Werkstücks um die Rotationsachse (7) des Werkzeugs (6) rotiert,
**dadurch gekennzeichnet, dass**
die Fertigteilgeometriedaten zum Angeben der geometrischen Form der Fläche (3) des Flankenabschnitts (2) Positionsdaten einer Gruppe von Punkten auf der Fläche (3) des Flankenabschnitts (2) umfassen, wobei die Positionsdaten eine Position der Punkte der Gruppe von Punkten angeben,
jeder Punkt der Gruppe von Punkten einer Spalte von Punkten und einer Zeile von Punkten zugeordnet ist, wobei alle Punkte einer Spalte von Punkten in einer gemeinsamen Ebene (5) liegen und die gemeinsame Ebene (5) der Punkte einer Spalte von Punkten senkrecht auf einer Tangentialebene (4) der Mantelfläche des Grundkörpers (1) steht, wobei die Tangentialebene (4) des Grundkörpers (1) eine tangentiale Ebene zu der Mantelfläche des Grundkörpers (1) in einem gemeinsamen Punkt (10) der gemeinsamen Ebene (5) mit der Mantelfläche des Grundkörpers (1) ist,
die Bahndaten derart erzeugt werden, dass die Werkzeugbahn parallel zu einer durch die Punkte einer ersten Zeile von Punkten verlaufende Kurve verläuft, und
die Bahndaten weiterhin derart erzeugt werden, dass die Rotationsachse (7) des Werkzeugs (6) an jedem der Punkte (5b) der ersten Zeile von Punkten in der gemeinsamen Ebene (5) der Spalte des jeweiligen Punkts (5b) der ersten Zeile liegend orientiert ist,
wobei die Fertigteilgeometriedaten zum Angeben der Geometrie der Fläche (3) des Flankenabschnitts (2) weiterhin zu einem ersten Punkt (5b) der Gruppe von Punkten Normalendaten umfassen, wobei die Normalendaten eine Richtung eines Normalenvektors der Fläche (3) des Flankenabschnitts (2) an dem ersten Punkt (5b) angeben, wobei die Bahndaten weiterhin derart erzeugt werden, dass die Rotationsachse (7) des Werkzeugs (6) an dem ersten Punkt (5b) senkrecht zu dem Normalenvektor an dem ersten Punkt (5b) ist.

2. Verfahren nach Anspruch 1, **dadurch gekennzeichnet, dass** die Rotationsachse (7) des Werkzeugs (6) an jedem der Punkte (5b) der ersten Zeile von Punkten in der gemeinsamen Ebene (5) der Spalte des jeweiligen Punkts (5b) der ersten Zeile liegt.

3. Verfahren nach Anspruch 1 oder Anspruch 2, **dadurch gekennzeichnet, dass** der gemeinsame Punkt (10) auf einer Leitkurve (9) liegt, wobei die Leitkurve (9) auf der Mantelfläche des Grundkörpers (1) verläuft.

4. Verfahren nach Anspruch 3, **dadurch gekennzeichnet, dass** die gemeinsame Ebene (5) weiterhin senkrecht auf der Leitkurve (9) steht.

5. Verfahren nach zumindest einem der Ansprüche 1 bis 4, **dadurch gekennzeichnet, dass** das vorbestimmte Fertigteil ein Zahnrad, ein Impeller oder eine Blisk ist, wobei der zumindest eine Flankenabschnitt (2) eine Zahnflanke des Zahnrads oder eine Blattflanke des Impellers oder der Blisk ist, oder dass vorbestimmte Fertigteil einen beliebigen Grundkörper (1) mit zumindest einem nach Innen oder nach Außen abstehenden Flankenabschnitt (2) umfasst.

6. Verfahren nach zumindest einem der Ansprüche 1 bis 5, **dadurch gekennzeichnet, dass** die Werkzeugmaschine eine Fräsmaschine, Fräs-/Drehmaschine, oder Dreh-/Fräsmaschine ist und das rotationssymmetrische Werkzeug (6) ein Schaftfräser, Kugelfräser, Torusfräser, Tonnenfräser oder ein anderes rotationssymmetrisches Werkzeug ist.

7. Verfahren nach zumindest einem der Ansprüche 1 bis 6, **dadurch gekennzeichnet, dass** die Bahndaten eine Mehrzahl von Werkzeugbahnen entlang der Fläche (3) des Flankenabschnitts (2) angeben, wobei jeder der Spalten der Gruppe von Punkten die gleiche Zahl an Punkten zugeordnet ist und jede der Mehrzahl von Werkzeugbahnen jeweils parallel zu einer der Zeilen von Punkten verläuft.

8. Verfahren nach zumindest einem der Ansprüche 1 bis 7, **gekennzeichnet durch** den weiteren Schritt Festlegen eines oder mehrerer Punktdichtegrenzwerte für die Gruppe von Punkten auf der Fläche (3) des Flankenabschnitts (2), wobei im Schritt Bestimmen von Fertigteilgeometriedaten die Fertigteilgeometriedaten derart erzeugt werden, dass der minimale und/oder durchschnittliche Abstand zwischen benachbarten Punkten einer Zeile der Gruppe von Punkten und/oder benachbarten Punkten einer Spalte der Gruppe von Punkten jeweils einen der festgelegten einen oder mehreren Punktdichtegrenzwerte nicht unterschreitet und/oder der maximale und/oder durchschnittliche Abstand zwischen benachbarten Punkten einer Zeile der Gruppe von Punkten und/oder benachbarten Punkten einer Spalte der Gruppe von Punkten jeweils einen der festgelegten einen oder mehreren Punktdichtegrenzwerte nicht überschreitet.

9. Verfahren nach einem der Ansprüche 1 bis 8, **dadurch gekennzeichnet, dass** das Werkzeug (6) ein einen Eckenradius umfassendes Werkzeug ist, insbesondere ein einen Eckenradius aufweisender Schaftfräser, wobei die Bahndaten derart erzeugt werden, dass ein abgerundeter Übergangsbereich (8) orientiert an der Leitkurve (9) zwischen dem Flankenabschnitt (2) und dem Grundkörper (1) des Werkstücks bei Abfahren der Werkzeugbahn anhand der Bahndaten entsprechend dem Eckenradius gebildet wird, wobei die Bahndaten insbesondere derart erzeugt werden, dass zusätzlich zu dem abgerundeten Übergangsbereich (8) bei Abfahren der Werkzeugbahn anhand der Bahndaten ein Tangentialabschnitt (3b) zwischen dem abgerundeten Übergangsbereich (8) und einem verzahnungsaktiven Flankenbereich (3a) der Fläche (3) des Zahnflankenabschnitts (2) ausgebildet wird.

10. Verfahren nach einem der Ansprüche 1 bis 9, **dadurch gekennzeichnet, dass** das Werkzeug (6) eine Längserstreckung entlang der Rotationsachse (7) des Werkzeugs (6) aufweist, wobei die Bahndaten weiterhin derart erzeugt werden, dass das Werkzeug (6) bei einem Abfahren einer ersten Werkzeugbahn der Mehrzahl von Werkzeugbahnen orientiert an einer ersten Zeile von Punkten im Vergleich zu einem Abfahren einer zweiten Werkzeugbahn der Mehrzahl von Werkzeugbahnen entlang einer zweiten Zeile von Punkten das Werkzeug (6) relativ zu der jeweiligen Zeile von Punkten orientiert an der Fläche (3) in Richtung der Rotationsachse (7) des Werkzeugs (6) derart verschoben und/oder rotiert ist, dass beim Abtragen von Material von dem Werkstück entlang der zweiten Werkzeugbahn ein Fräsbereich, eine Schneidlinie oder eine Schneidkurve auf der Umfangfläche des Werkzeugs (6) im Vergleich zu dem Abtragen von Material von dem Werkstück entlang der ersten Werkzeugbahn in Richtung der Rotationsachse (7) des Werkzeugs (6) verschoben ist.

11. Vorrichtung zum Erzeugen von Steuerdaten zum Steuern eines Werkzeugs an einer zumindest 5-Achsen umfassenden Werkzeugmaschine zum Bearbeiten eines Werkstücks zum Herstellen eines vorbestimmten Fertigteils mit einem Grundkörper (1) und zumindest einem von dem Grundkörper (1) abstehenden Flankenabschnitt (2) durch Zerspanen, mit:
- einem Geometrieparameter-Bestimmungsmittel (801) zum Bestimmen grundlegender Geometrieparameter einer Fertigteilgeometrie des Fertigteils, wobei die Fertigteilgeometrie einer Geometrie des vorbestimmten Fertigteils entspricht,
- einem Fertigteilgeometriedaten-Erzeugungsmittel (802) zum Erzeugen von Fertigteilgeometriedaten der vorbestimmten Fertigteilgeometrie des Fertigteils anhand der grundlegenden Geometrieparameter, wobei die Fertigteilgeometriedaten eine geometrische Form einer Fläche (3) des Flankenabschnitts (2) angeben, und
- einem Bahndaten-Erzeugungsmittel (803) zum Erzeugen von Bahndaten anhand der Fertigteilgeometriedaten, wobei die Bahndaten angeben, welche Werkzeugbahn entlang der Fläche (3) des Flankenabschnitts (2) durch das Werkzeug mit welcher Werkzeugorientierung relativ zu dem Werkstück zum Abtragen von Material des Werkstücks abzufahren ist, wobei das Werkzeug (6) zum Abtragen von Material des Werkstücks um eine Rotationsachse (7) des Werkzeugs (6) rotiert,
**dadurch gekennzeichnet, dass**
die Fertigteilgeometriedaten zum Angeben der Geometrie der Fläche (3) des Flankenabschnitts (2) Positionsdaten einer Gruppe von Punkten auf der Fläche (3) des Flankenabschnitts (2) umfassen, wobei die Positionsdaten eine Position der Punkte der Gruppe von Punkten angeben,
jeder Punkt der Gruppe von Punkten einer Spalte von Punkten und einer Zeile von Punkten zugeordnet ist, wobei alle Punkte einer Spalte von Punkten in einer gemeinsamen Ebene (5) liegen und die gemeinsame Ebene (5) der Punkte einer Spalte von Punkten senkrecht auf einer Tangentialebene (4) der Mantelfläche des Grundkörpers (1) steht, wobei die Tangentialebene (4) der Mantelfläche des Grundkörpers (1) eine tangential Ebene zu der Mantelfläche des Grundkörpers in einem gemeinsamen Punkt (10) der gemeinsame Ebene (5) mit der Mantelfläche des Grundkörpers (1) ist,
die Bahndaten derart erzeugt werden, dass die Werkzeugbahn parallel zu einer durch die Punkte einer ersten Zeile von Punkten verlaufende Kurve verläuft, und
die Bahndaten weiterhin derart erzeugt werden, dass die Rotationsachse (7) des Werkzeugs (6) an jedem der Punkte (5b) der ersten Zeile von Punkten in der gemeinsamen Ebene (5) der Spalte des jeweiligen Punkts (5b) der ersten Zeile liegend orientiert ist,
wobei die Fertigteilgeometriedaten zum Angeben der Geometrie der Fläche (3) des Flankenabschnitts (2) weiterhin zu einem ersten Punkt (5b) der Gruppe von Punkten Normalendaten umfassen, wobei die Normalendaten eine Richtung eines Normalenvektors der Fläche (3) des Flankenabschnitts (2) an dem ersten Punkt (5b) angeben, wobei die Bahndaten weiterhin derart erzeugt werden, dass die Rotationsachse (7) des Werkzeugs (6) an dem ersten Punkt (5b) senkrecht zu dem Normalenvektor an dem ersten Punkt (5b) ist.

12. Computerprogrammprodukt, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind, von einem Datenverarbeitungsmittel einer Datenverarbeitungsrichtung verarbeitet zu werden, so dass die Datenverarbeitungseinrichtung in Verbindung mit dem Computerprogrammprodukt dazu geeignet ist, ein Verfahren nach zumindest einem der Ansprüche 1 bis 10 auszuführen.

## Claims

1. A process for generating control data for controlling a tool on a machine tool comprising at least 5 axes for machining a workpiece for the production of a predetermined finished part having a base body (1) and at least one flank section (2) protruding from the base body (1), wherein
the process comprises the steps of:
- determining fundamental geometry parameters of a finished part geometry of the finished part, the finished part geometry corresponding to a geometry of the predetermined finished part,
- generating finished part geometry data of the predetermined finished part geometry of the finished part by means of the fundamental geometry parameters, the finished part geometry data indicating a geometry shape of a surface (3) of the flank section (2), and
- generating path data by means of the finished part geometry data, the path data indicating the tool path along the surface (3) of the flank section (2) over which the tool has to travel with what tool orientation relative to the workpiece to remove material from the workpiece, the tool orientation of the tool (6) corresponding to an orientation of an axis of rotation (7) of the tool (6) and the tool (6) rotating about the axis of rotation (7) of the tool (6) to remove material from the workpiece,
**characterised in that**
the finished part geometry data for indicating the geometric shape of the surface (3) of the flank section (2) comprise the position data of a group of points on the surface (3) of the flank section (2), the position data indicating a position of the points of the group of points,
each point of the group of points is attributed to a column of points and a line of points, all points of a column of points lying in a common plane (5) and the common plane (5) of the points of a column of points being perpendicular to a tangent plane (4) of the lateral surface of the base body (1), the tangent plane (4) of the base body (1) being a tangent plane relative to the lateral surface of the base body (1) in a common point (10) of the common plane (5) with the lateral surface of the base body (1),
the path data is generated such that the tool path is parallel to a cam extending through the points of a first line of points, and
the path data is furthermore generated such that the axis of rotation (7) of the tool (6) orients itself at each of the points (5b) of the first line of points lying in the common plane (5) of the column of the respective point (5b) of the first line,
wherein the finished part geometry data for indicating the geometry of the surface (3) of the flank section (2) furthermore comprises normal data for a first point (5b) of the group of points, the normal data indicating a direction of a normal vector of the surface (3) of the flank section (2) an the first point (5b), the path data furthermore being generated such that at the first point (5b) the axis of rotation (7) of the tools is perpendicular to the normal vector at the first point (5b).

2. The process according to claim 1, **characterised in that** the axis of rotation (7) of the tool (6) at each of the points (5b) of the first line of points lies in the common plane (5) of the column of the respective point (5b) of the first line.

3. The process according to claim 1 or claim 2, **characterised in that** the common point (10) is on a lead cam (9), the lead cam (9) extending on the lateral surface of the base body (1).

4. The process according to claim 3, **characterised in that** the common plane (5) is furthermore perpendicular to the lead cam (9).

5. The process according to at least one of claims 1 to 4, **characterised in that** the predetermined finished part is a gear wheel, an impeller or a blisk, the at least one flank section (2) being a tooth flank of the gear wheel or a blade flank of the impeller or the blisk or that the predetermined finished part comprises any base body (1) having at least one flank section (2) protruding inwards or outwards.

6. The process according to at least one of claims 1 to 5, **characterised in that** the machine tool is a milling machine, milling machine/lathe or lathe/milling machine and the rotationally symmetric tool (6) is an end milling cutter, cherry, torus cutter, drum cutter or another rotationally symmetric tool.

7. The process according to at least one of claims 1 to 6, **characterised in that** the path data indicates a plurality of tool paths along the surface (3) of the flank section (2), the same number of points being attributed to each of the column of the group of points and each of the plurality of tool paths extending in each case parallel to one of the lines of points.

8. The process according to at least one of claims 1 to 7, **characterised by** the further step of determining one or more point density limit values for the group of points on the surface (3) of the flank section (2), in the step of determining finished part geometry data the finished part geometry data being generated such that in each case the minimum and/or average distance between adjacent points of a line of the group of points and/or adjacent points of a column of the group does not fall below one of the determined one or more point density limit values and/or in each case the maximum and/or average distance between adjacent points of a line of the group of points and/or adjacent points of a column of the group of points does not exceed one of the determined one or more point density limit values.

9. The process according to at least one of claims 1 to 8, **characterised in that** the tool (6) is a tool comprising a corner radius, in particular an end milling cutter having a corner radius, wherein the path data is generated such that a rounded transition section (8) oriented along the lead cam (9) between the flank section (2) and the base body (1) of the tool is formed when the tool path is travelled by means of the path data according to the corner radius, the path data particularly being generated such that in addition to the rounded transition section (8) when the tool path is travelled by means of the path data a tangent section (3b) between the rounded transition section (8) and a toothing-active flank section (3a) of the surface (3) of the tooth flank section (2) is formed.

10. The process according to one of claims 1 to 9, **characterised in that** the tool (6) has a longitudinal extension along the axis of rotation (7) of the tool (6), the path data being furthermore generated such that when the tool travels over a first line of points of the plurality of tool paths as compared to the travelling over a second tool path of the plurality of tool paths along a second line of points, oriented by a first line of points, the tool (6) is displaced and/or rotated relative to the particular line of points, oriented by the surface (3) in the direction of the axis of rotation (7) of the tool (6), such that when material is removed from the workpiece along the second tool path, a milling area, a cutting line or a cutting curve on the peripheral surface of the tool (6) is displaced, as compared to the removal of material from the workpiece along the first tool axis in the direction of the axis of rotation (7) of the tool (6).

11. An apparatus for generating control data for controlling a tool on a machine tool comprising a least 5 axes for machining a workpiece for the production of a predetermined finished part including a base body (1) and at least one flank section (2) protruding from the base body (1) by machining, comprising:
- a geometry parameter determining means (801) for determining fundamental geometry parameters of a finished part geometry of the finished part, the finished part geometry corresponding to a geometry of the predetermined finished part,
- a finished part geometry data generation means (802) for generating finished part geometry data of the predetermined finished part geometry of the finished part by means of the fundamental geometry parameters, the finished part geometry data indicating a geometric shape of a surface (3) of the flank section (2), and
a path data generation means (803) for generating path data by means of the finished part geometry data, the path data indicating which tool paths along the surface (3) of the flank section (2) over is to be travelled by the tool with what tool orientation relative to the workpiece to remove material from the workpiece, the tool (6) rotating about an axis of rotation (7) of the tool (6) to remove material from the workpiece,
**characterised in that**
the finished part geometry data for indicating the geometry of the surface (3) of the flank section (2) comprise position data of a group of points on the surface (3) of the flank section (2), the position data indicating a position of the points of the group of points,
each point of the group of points is attributed to a column of points and a line of points, all points of one column of points lying in a common plane (5) and the common plane (5) of the points of one column of points being perpendicular on a tangent plane (4) of the lateral surface of the base body (1), the tangent plane (4) of the lateral surface of the base body (1) being a tangent plane to the lateral surface of the base body in a common point (10) of the common plane (5) with the lateral surface of the base body (1),
the path data is generated such that the tool path is parallel to a cam extending parallel through the points of a first line of points, and
the path data is furthermore generated such that the axis of rotation (7) of the tool (6) is oriented lying at each of the points (5b) of the first line of points in the common plane (5) of the column of the particular point (5b) of the first line,
the finished part geometry data for indicating the geometry of the surface (3) of the flank section (2) furthermore comprising normal data relating to a first point (5b) of the group of points, the normal data indicating a direction of a normal vector of the surface (3) of the flank section(2) at the first point (5b), the path data furthermore being generated such that the axis of rotation (7) of the tool (6) at the first point (5b) is perpendicular to the normal vector at the first point (5b).

12. A computer programme product, which comprises a computer-readable medium and a computer programme stored therein, the computer programme being stored in the form of a state sequence which corresponding to commands adapted to be processed by a data processing means of a data processing equipment so that in connection with the computer programme product the data processing equipment is suited to carry out a process according to eat least one of claims 1 to 10.

## Revendications

1. Procédé de génération de données de commande en vue de commander un outil sur une machine-outil comportant au moins 5 axes et destinée à l'usinage d'une pièce à usiner pour réaliser une pièce finie prédéterminée comportant un corps de base (1) et au moins une portion formant flanc (2) faisant saillie du corps de base (1),
le procédé comprenant les étapes suivantes :
- la détermination de paramètres géométriques fondamentaux d'une géométrie de la pièce finie, la géométrie de la pièce finie correspondant à une géométrie de la pièce finie prédéterminée,
- la génération de données géométriques de la géométrie prédéterminée de la pièce finie basées sur les paramètres géométriques fondamentaux, les données géométriques de la pièce finie indiquant une forme géométrique d'une surface (3) de la portion formant flanc (2), et
- la génération de données de trajectoire basées sur les données géométriques de la pièce finie, les données de trajectoire indiquant quelle trajectoire d'usinage le long de la surface (3) de la portion formant flanc (2) doit parcourir l'outil à quelle orientation de l'outil par rapport à la pièce en vue d'enlever de la matière de la pièce à usiner, l'orientation de l'outil (6) correspondant à l'orientation d'un axe de rotation (7) de l'outil (6), et l'outil (6) tournant autour de l'axe de rotation (7) de l'outil (6) en vue d'enlever de la matière de la pièce à usiner,
**caractérisé en ce que**
les données géométriques de la pièce finie destinées à indiquer la forme géométrique de la surface (3) de la portion formant flanc (2) comprennent des données de position d'un ensemble de points sur la surface (3) de la portion formant flanc (2), les données de position indiquant une position des points parmi l'ensemble de points,
chaque point parmi l'ensemble de points étant associé à une colonne de points et à une ligne de points, tous les points d'une colonne de points se situant dans un plan commun (5) et le plan commun (5) des points d'une colonne de points se trouvant perpendiculairement sur un plan tangentiel (4) de la surface enveloppe du corps de base (1), le plan tangentiel (4) du corps de base (1) étant un plan tangentiel à la surface enveloppe du corps de base (1) dans un point commun (10) du plan commun (5) avec la surface enveloppe du corps de base (1),
les données de trajectoire sont générées de telle sorte que la trajectoire d'usinage est parallèle à une courbe passant par les points d'une première ligne de points, et
les données de trajectoire sont en outre générées de telle sorte que dans chacun des points (5b) de la première ligne de points l'axe de rotation (7) de l'outil (6) est orienté de manière à se trouver dans le plan commun (5) de la colonne du point respectif (5b) de la première ligne,
les données géométriques de la pièce finie destinées à indiquer la géométrie de la surface (3) de la portion formant flanc (2) comprenant, en plus d'un premier point (5b) de l'ensemble de points, des données normales, les données normales indiquant une direction d'un vecteur normal de la surface (3) de la portion formant flanc (2) dans le premier point (5b), les données de trajectoire étant générées en outre de telle sorte que dans le premier point (5b) l'axe de rotation (7) de l'outil (6) est perpendiculaire au vecteur normal dans le premier point (5b).

2. Procédé selon la revendication 1, **caractérisé en ce que** dans chacun des points (5b) de la première ligne de points l'axe de rotation (7) de l'outil (6) se trouve dans le plan commun (5) de la colonne du point respectif (5b) de la première ligne.

3. Procédé selon la revendication 1 ou la revendication 2, **caractérisé en ce que** le point commun (10) se trouve sur une courbe directrice (9), la courbe directrice (9) s'étendant sur la surface enveloppe du corps de base (1).

4. Procédé selon la revendication 3, **caractérisé en ce que** le plan commun (5) se trouve en outre perpendiculairement sur la courbe directrice (9).

5. Procédé selon l'une au moins des revendications 1 à 4, **caractérisé en ce que** la pièce finie prédéterminée est une roue dentée, une roue (impeller) ou un disque aubagé monobloc (blisk), ladite au moins une portion formant flanc (2) étant un flanc de dent d'une roue dentée ou un flanc d'aube de l'impeller ou du blisk, ou **en ce que** la pièce finie prédéterminée comprend un corps de base (1) quelconque pourvu d'au moins une portion formant flanc (2) en saillie vers l'intérieur ou vers l'extérieur.

6. Procédé selon l'une au moins des revendications 1 à 5, **caractérisé en ce que** la machine-outil est une fraiseuse, une fraiseuse/tour ou un tour/fraiseuse et l'outil (6) à symétrie de révolution est une fraise à queue, une fraise boule, une fraise torique, une fraise cylindrique ou un autre outil à symétrie de révolution.

7. Procédé selon l'une au moins des revendications 1 à 6, **caractérisé en ce que** les données de trajectoire indiquent une pluralité de trajectoires d'usinage le long de la surface (3) de la portion formant flanc (2), chacune des colonnes parmi l'ensemble de points étant associée au même nombre de points et chacune parmi la pluralité de trajectoires d'usinage s'étendant parallèlement à l'une des lignes de points respectives.

8. Procédé selon l'une au moins des revendications 1 à 7, **caractérisé par** l'étape supplémentaire de la définition d'une ou de plusieurs valeurs limites de densité de points pour l'ensemble de points sur la surface (3) de la portion formant flanc (2), et dans l'étape de définition de données géométriques de la pièce finie, les données géométriques de la pièce finie sont générées de telle sorte que la distance minimale et/ou moyenne entre des points voisins d'une ligne parmi l'ensemble de points et/ou entre des points voisins d'une colonne parmi l'ensemble de points ne passe pas au-dessous de ladite ou desdites valeurs limites définie(s) de densité de points, et/ou la distance maximale et/ou moyenne entre des points voisins d'une ligne parmi l'ensemble de points et/ou entre des points voisins d'une colonne parmi l'ensemble de points ne passe pas au-dessus de ladite ou desdites valeurs limites définie(s) de densité de points.

9. Procédé selon l'une des revendications 1 à 8, **caractérisé en ce que** ledit outil (6) est un outil comprenant un rayon en coin, en particulier une fraise à queue présentant un rayon en coin, les données de trajectoire étant générées de telle sorte qu'une zone de transition arrondie (8) est formée en correspondance du rayon en coin, en étant orientée sur la courbe directrice (9) entre la portion formant flanc (2) et le corps de base (1) de la pièce à usiner lors du parcours de la trajectoire d'usinage basée sur les données de trajectoire, les données de trajectoire étant générées en particulier de telle sorte qu'en supplément à la zone de transition arrondie (8), lors du parcours de la trajectoire d'usinage basée sur les données de trajectoire, une portion tangentielle (3b) est formée entre la zone de transition arrondie (8) et une zone de flanc (3a) à denture active de la surface (3) de la portion (2) à flanc de dent.

10. Procédé selon l'une des revendications 1 à 9, **caractérisé en ce que** l'outil (6) présente une extension longitudinale le long de l'axe de rotation (7) de l'outil (6), les données de trajectoire étant en outre générées de telle sorte que lors d'un parcours d'une première trajectoire d'usinage parmi la pluralité de trajectoires d'usinage orientée sur une première ligne de points, par comparaison à un parcours d'une seconde trajectoire d'usinage parmi la pluralité de trajectoires d'usinage le long d'une seconde ligne de points, l'outil (6) est déplacé et/ou tourné en direction de l'axe de rotation (7) de l'outil (6) par rapport à la ligne respective de points, en étant orienté sur la surface (3), de telle sorte que lors d'un enlèvement de matière de la pièce à usiner le long de la seconde trajectoire d'usinage, une zone de fraisage, une ligne de coupe ou une courbe de coupe sur la surface périphérique de l'outil (6) est déplacée en direction de l'axe de rotation (7) de l'outil (6) par comparaison à l'enlèvement de matière de la pièce à usiner le long de la première trajectoire d'usinage.

11. Dispositif de génération de données de commande en vue de commander un outil sur une machine-outil comportant au moins 5 axes et destinée à l'usinage d'une pièce à usiner pour réaliser une pièce finie prédéterminée comportant un corps de base (1) et au moins une portion formant flanc (2) faisant saillie du corps de base (1), comportant
- un moyen (801) de détermination de paramètres géométriques pour déterminer des paramètres géométriques fondamentaux d'une géométrie de la pièce finie, la géométrie de la pièce finie correspondant à une géométrie de la pièce finie prédéterminée,
- un moyen (802) de génération de données géométriques de la pièce finie pour générer des données géométriques de la géométrie prédéterminée de la pièce finie basées sur les paramètres géométriques fondamentaux, les données géométriques de la pièce finie indiquant une forme géométrique d'une surface (3) de la portion formant flanc (2), et
- un moyen (803) de génération de données de trajectoire pour générer des données de trajectoire basées sur les données géométriques de la pièce finie, les données de trajectoire indiquant quelle trajectoire d'usinage le long de la surface (3) de la portion formant flanc (2) doit parcourir l'outil à quelle orientation de l'outil par rapport à la pièce en vue d'enlever de la matière de la pièce à usiner, l'outil (6) tournant autour de l'axe de rotation (7) de l'outil (6) en vue d'enlever de la matière de la pièce à usiner,
**caractérisé en ce que**
les données géométriques de la pièce finie destinées à indiquer la géométrie de la surface (3) de la portion formant flanc (2) comprennent des données de position d'un ensemble de points sur la surface (3) de la portion formant flanc (2), les données de position indiquant une position des points de l'ensemble de points,
chaque point parmi l'ensemble de points étant associé à une colonne de points et à une ligne de points, tous les points d'une colonne de points se situant dans un plan commun (5) et le plan commun (5) de points d'une colonne de points se trouvant perpendiculairement sur un plan tangentiel (4) de la surface enveloppe du corps de base (1), le plan tangentiel (4) de la surface enveloppe du corps de base (1) étant un plan tangentiel à la surface enveloppe du corps de base dans un point commun (10) du plan commun (5) avec la surface enveloppe du corps de base (1),
les données de trajectoire sont générées de telle sorte que la trajectoire d'usinage est parallèle à une courbe passant par les points d'une première ligne de points, et
les données de trajectoire sont en outre générées de telle sorte que dans chacun des points (5b) de la première ligne de points l'axe de rotation (7) de l'outil (6) est orienté de manière à se trouver dans le plan commun (5) de la colonne du point respectif (5b) de la première ligne,
les données géométriques de la pièce finie destinées à indiquer la géométrie de la surface (3) de la portion formant flanc (2) comprenant, en plus d'un premier point (5b) parmi l'ensemble de points, des données normales, les données normales indiquant une direction d'un vecteur normal de la surface (3) de la portion formant flanc (2) dans le premier point (5b), les données de trajectoire étant générées en outre de telle sorte que dans le premier point (5b) l'axe de rotation (7) de l'outil (6) est perpendiculaire au vecteur normal dans le premier point (5b).

12. Produit de programme informatique qui comprend un support lisible par ordinateur et un programme informatique mémorisé dans celui-ci, le programme informatique étant mémorisé sous la forme d'une succession d'états qui correspondent à des ordres établis pour être traités par un moyen de traitement de données d'un dispositif de traitement de données, de telle sorte que le dispositif de traitement de données en association avec le produit de programme informatique est apte à mettre en oeuvre un procédé selon l'une au moins des revendications 1 à 10.
